# EUROPEAN PATENT SPECIFICATION

(11) **EP 3 280 201 B1**
(45) Date of publication and mention of the grant of the patent: **24.11.2021**
(21) Application number: 16773236.1
(22) Date of filing: 01.04.2016
(51) Int. Cl.: H04W 68/02, H04W 88/08, H04W 88/14, H04W 92/04

(54) **COMMUNICATION SYSTEM, MME AND ENB**
KOMMUNIKATIONSSYSTEM, MME UND ENB
SYSTÈME DE COMMUNICATION, MME ET ENB

(30) Priority: 03.04.2015 JP 2015077066
(43) Date of publication of application: 07.02.2018
(73) Proprietor: NEC Corporation, Tokyo 108-8001 (JP)
(72) Inventor: TAMURA, Tomu, Tokyo 108-8001 (JP); TAMURA, Toshiyuki, Tokyo 108-8001 (JP); HAYASHI, Sadafuku, Tokyo 108-8001 (JP); UEDA, Yoshio, Tokyo 108-8001 (JP)
(74) Representative: MacDougall, Alan John Shaw
(86) International application number: PCT/JP2016/060940
(87) International publication number: WO 2016/159356

(56) References cited:
- CN-A- 103 906 179
- JP-A- 2014 150 557
- US-A1- 2006 073 846
- US-A1- 2013 337 851
- CATT: 'Methods for acquiring whether neighbor eNBs support category 0 UE' 3GPP TSG-RAN WG3#85 R3-141697, [Online] XP050796086 Retrieved from the Internet: <URL:http://www.3gpp.org/ftp/tsg_ran/ WG3_Iu/TSGR3_85/Docs/ R3-141697.zip>
- VODAFONE: 'Paging Load Reduction' 3GPP TSG-SA WG2#106, [Online] page 2, XP050895671 Retrieved from the Internet: <URL:http://www.3gpp.org/ftp/tsg_sa/ WG2_Arch/TSGS2_106_San_Francisco/Docs/S2-14 4273. zip>

## Description

### [FIELD]

### [Reference to Related Application]

The present invention is based upon and claims the benefit of the priority of Japanese patent application No. 2015-077066, filed on April 3, 2015.

The present invention relates to a communication system, to an MME and to an eNB.

### [BACKGROUND]

Ever since the advent of smartphones, vast amounts of data have been flowing through networks of mobile telecommunications carriers, and the amounts of data are increasing steadily. This increase is based on several reasons. For example, more and more people connect to the Internet to download or upload videos. In addition, more and more people communicate messages by using pictures and characters through applications installed on their smartphones, instead of by using voice call functions of their smartphones. In addition, for health maintenance and management, more and more people acquire information about their heart rates, blood pressures, step numbers, calorie amounts consumed, sleeping hours, or the like from their wearable terminals, upload the data, and download data to receive services matching their purposes. There are also applications that constantly receive and transmit data, regardless of the intentions of the owners.

In addition, there is an effort called "Internet of Things" (IoT) is underway, which will be a new cause that further increases the amount of data flowing through the networks. The purpose of IoT is to create values that have never existed before by embedding a communication function(s) into every apparatus and controlling these apparatuses. The introduction of IPv6 significantly has increased the number of IP addresses that can be allocated to apparatuses. In addition, apparatuses called Machine Type Communication (hereinafter, "MTC") terminals that exchange information with each other, not humans exchanging information with each other, have been made installable everywhere. Thus, the realization of IoT will certainly be accelerated.

IoT assumes that MTC terminals transmit acquired data to other apparatuses such as servers through wireless connection, not wired connection. In this way, the MTC terminals can be installed more easily. In addition, as the radio communication network, not only a wireless LAN but also a cell-phone network can of course be used. There are cases in which an MTC terminal receives control information from a network. In such cases, first, a Mobility Management Entity (hereinafter, "MME") transmits a paging message to the MTC terminal. In Long Term Evolution (hereinafter, "LTE"), the location of a terminal is managed per TAI List (a Tracking Area Identity List), and the MME transmits a paging message to all the Evolved NodeBs (base stations; hereinafter, "eNBs") having cells to which TAIs included in a TAI List are allocated. Thus, when the MME transmits a paging message to an MTC terminal, the MME transmits the paging message to all the eNBs having cells to which the same TAI as that of the cell in which the MTC terminal exists is allocated. If individual MTC terminals regularly transmit data and the MME transmits paging messages to transmit message such as for acknowledgement of the reception of the data to the individual MTC terminals, there is a concern that the network could be congested by the processing of the paging messages.

NPLs 1 and 2 relate to processing of the above paging message. NPLs 3-6 are 3GPP specifications that could relate to the present invention.

### [CITATION LIST]

### [NONPATENT LITERATURE]

NPL 1: 3GPP SA WG2 TD, "Paging Optimization for the low mobility devices", S2-141884 3GPP TSG-SA-WG2 Meeting #103, May 19-23, 2014, [online], [searched on March 23, 2015], Internet<URL:http://www.3gpp.org/FTP/TSG_SA/WG2_Arch/TSGS2_1 03_Phoenix/Docs/S2-141884.zip>
NPL 2: 3GPP SA WG2 TD, "Paging Load Reduction", S2-144273 3GPP TSG-SA-WG2 Meeting #106, November 17-21, 2014, [online], [searched on March 23, 2015], Internet<URL:http://www.3gpp.org/ftp/tsg_sa/WG2_Arch/TSGS2_106_ San_Francisco/Docs/S2-144273.zip>
NPL 3: Evolved Universal Terrestrial Radio Access Network (E-UTRAN); S1 Application Protocol (S1AP) [3GPP TS36.413 v12.5.0], Internet<URL:http://www.3gpp.org/ftp/Specs/archive/36_series/36.413 /36413-c50.zip>
NPL 4: General Packet Radio Service (GPRS) enhancements for Evolved Universal Terrestrial Radio Access Network (E-UTRAN) access [3GPP TS23.401 v13.1.0], [online], [searched on March 23, 2015], Internet<URL:http://www.3gpp.org/ftp/Specs/archive/23_series/23.401 /23401-d10.zip>
NPL 5: Evolved Universal Terrestrial Radio Access (E-UTRA) and Evolved Universal Terrestrial Radio Access Network (E-UTRAN); Overall description; Stage 2 [3GPP TS36.300 v12.4.0], [online], [searched on March 23, 2015], Internet<URL:http://www.3gpp.org/ftp/Specs/archive/36-series/36.300 /36300-c40.zip>
NPL 6: Telecommunication management; Subscriber and equipment trace; Trace control and configuration management [3GPP TS32.422 v12.4.0], [online], [searched on March 23, 2015], Internet<URL:http://www.3gpp.org/ftp/Specs/archive/32_series/32.422 /32422-c40.zip>
NPL 7: Evolved Universal Terrestrial Radio Access (E-UTRA); Radio Resource Control (RRC); Protocol specification [3GPP TS36.331 v12.5.0], [online], [searched on April 1, 2015], Internet <URL:http://www.3gpp.org/ftp/Specs/archive/36_series/36.331/36331-c50.zip>

US 2006/073846 discloses upon determining a need to transmit a message (such as a paging message) to a mobile station within a multi-band wireless communications system, the system (via, for example, a mobile switching center) identifies discrete geographic locations within the system having a likelihood of presently supporting the mobile station and further identifies a band within the multi-band system that also has a present likelihood of presently supporting the mobile station. This information is then used (for example, by a base station controller) to identify one or more communication resources to be allocated for use when transmitting the message.

### [SUMMARY]

As the number of terminals increases, both the number of control signals in networks and the load on processing the control signals increase. Therefore, reduction in these increases is demanded.

The present invention provides a communication system, core network node and eNB that can contribute to the reduction in the increase of the number of control signals in networks and the load on processing the control signals.

According to independent claim 1, there is provided a communications system, comprising an MME, eNBs and UE, wherein the eNBs are configured to transmit an S1 setup request message including information about own one or more communication functions to the MME under a state where S1 connection has not been established between each of the eNBs and the MME;
the MME comprises a storage unit storing a first table for the one or more communication functions of the eNBs associated with eNB IDs; and the MME is configured to:
   when it receives the S1 setup request message from the eNBs, store the one or more communication functions in the first table; and
   when it receives an incoming request to the UE transmitted by an MTC-Inter Working Function, refer to UE location registration information and determine candidate eNBs having cells where the UE is allocated, then select an eNB capable of using a communication function supported by the UE among the candidate eNBs with reference to the first table, and then transmit a paging message to the selected eNB; and
the eNB, having received the paging message transmitted by the MME, being configured to transmit a paging message to own cells.

According to independent claim 8, there is provided an MME for a communication system substantially as described above.

According to independent claim 9, there is provided an eNB for a communication system substantially as described above.

The present invention can contribute to the reduction in the increase of the number of control signals in networks and the load on processing the control signals. In addition, the present invention can convert a core network node described in Background into a core network node having superiority in the reduction in the increase of the number of control signals in networks and the load on processing the control signals.

### [BRIEF DESCRIPTION OF THE DRAWINGS]

Fig. 1 illustrates a configuration according to an example embodiment of the present invention.
Fig. 2 illustrates a configuration of a mobile communication system according to a first example embodiment of the present invention.
Fig. 3 illustrates cells created by base stations according to the first example embodiment of the present invention.
Fig. 4 illustrates an example of base station information held by an MME according to the first example embodiment of the present invention.
Fig. 5 illustrates an example of terminal information held by the MME according to the first example embodiment of the present invention.
Fig. 6 is a sequence diagram illustrating an operation (eNB information acquisition processing) according to the first example embodiment of the present invention.
Fig. 7 is a sequence diagram illustrating an operation (paging processing) according to the first example embodiment of the present invention.
Fig. 8 illustrates an example of a message transmitted from an eNB to the MME according to the first example embodiment of the present invention.
Fig. 9 illustrates an example of a message transmitted from an eNB to the MME according to the first example embodiment of the present invention.
Fig. 10 illustrates an information element included in the messages in Figs. 8 and 9.
Fig. 11 illustrates cells created by base stations according to a second example embodiment of the present invention.
Fig. 12 illustrates an example of base station information held by an MME according to the second example embodiment of the present invention.
Fig. 13 is a sequence diagram illustrating an operation (eNB information acquisition processing) according to the second example embodiment of the present invention.
Fig. 14 is a sequence diagram illustrating an operation (paging processing) according to the second example embodiment of the present invention.
Fig. 15 illustrates an information element included in a message transmitted from an eNB to the MME according to the second example embodiment of the present invention.
Fig. 16 illustrates an example of a paging message transmitted from the MME to an eNB according to the second example embodiment of the present invention.
Fig. 17 illustrates an information element included in the paging message in Fig. 16.
Fig. 18 illustrates a difference between the second example embodiment of the present invention and NPL 3.
Fig. 19 illustrates an example of base station information held by an MME according to a third example embodiment of the present invention.
Fig. 20 is a sequence diagram illustrating an operation (eNB information acquisition processing) according to the third example embodiment of the present invention.
Fig. 21 is a sequence diagram illustrating an operation (paging processing) according to the third example embodiment of the present invention.
Fig. 22 illustrates an example of a message transmitted from an eNB to the MME according to the third example embodiment of the present invention.
Fig. 23 illustrates an example of a message transmitted from an eNB to the MME according to the third example embodiment of the present invention.
Fig. 24 illustrates an information element included in the messages in Figs. 22 and 23.
Fig. 25 illustrates a difference between the third example embodiment of the present invention and NPL 4.
Fig. 26 illustrates a difference between the third example embodiment of the present invention and NPL 4.
Fig. 27 illustrates a difference between the third example embodiment of the present invention and NPL 5.
Fig. 28 illustrates an example of a paging message transmitted from the MME to an eNB according to the third example embodiment of the present invention.
Fig. 29 illustrates an information element included in the paging message in Fig. 28.
Fig. 30 illustrates an example of base station information held by an MME according to a fourth example embodiment of the present invention.
Fig. 31 is a sequence diagram illustrating an operation (eNB information acquisition processing) according to the fourth example embodiment of the present invention.
Fig. 32 is a sequence diagram illustrating an operation (paging processing) according to the fourth example embodiment of the present invention.
Fig. 33 illustrates an example of a message transmitted from an eNB to the MME according to the fourth example embodiment of the present invention.
Fig. 34 illustrates an example of a message transmitted from an eNB to the MME according to the fourth example embodiment of the present invention.
Fig. 35 illustrates an information element included in the messages in Figs. 33 and 34.
Fig. 36 illustrates an example of a paging message transmitted from the MME to an eNB according to the fourth example embodiment of the present invention.
Fig. 37 illustrates an information element included in the paging message in Fig. 36.
Fig. 38 illustrates an example of base station information held by an MME according to a fifth example embodiment of the present invention.
Fig. 39 is a sequence diagram illustrating an operation (eNB information acquisition processing) according to the fifth example embodiment of the present invention.
Fig. 40 is a sequence diagram illustrating an operation (paging processing) according to the fifth example embodiment of the present invention.
Fig. 41 illustrates an example of a message transmitted from an eNB to the MME according to the fifth example embodiment of the present invention.
Fig. 42 illustrates an example of a message transmitted from an eNB to the MME according to the fifth example embodiment of the present invention.
Fig. 43 illustrates information element included in the messages in Figs. 41 and 42.
Fig. 44 illustrates an example of a paging message transmitted from the MME to an eNB according to the fifth example embodiment of the present invention.
Fig. 45 illustrates an information element included in the paging message in Fig. 44.
Fig. 46 is a sequence diagram illustrating an operation (eNB information acquisition processing) according to a sixth example embodiment of the present invention.
Fig. 47 is a sequence diagram illustrating an operation (paging processing) according to the sixth example embodiment of the present invention.
Fig. 48 illustrates an information element included in a message transmitted from a UE to an MME in Fig. 46.
Fig. 49 illustrates a configuration of a mobile communication system according to a seventh example embodiment of the present invention.
Fig. 50 is a sequence diagram illustrating an operation (eNB information acquisition processing) according to a seventh example embodiment of the present invention.
Fig. 51 is a sequence diagram illustrating an operation (paging processing) according to the seventh example embodiment of the present invention.
Fig. 52 illustrates a variation of the paging message according to the second example embodiment of the present invention.

### [MODES]

First, an outline of an example embodiment of the present invention will be described with reference to a drawing. In the following outline, various components are denoted by reference characters for the sake of convenience. Namely, the following reference characters are merely used as examples to facilitate understanding of the present invention, not to limit the present invention to the illustrated modes.

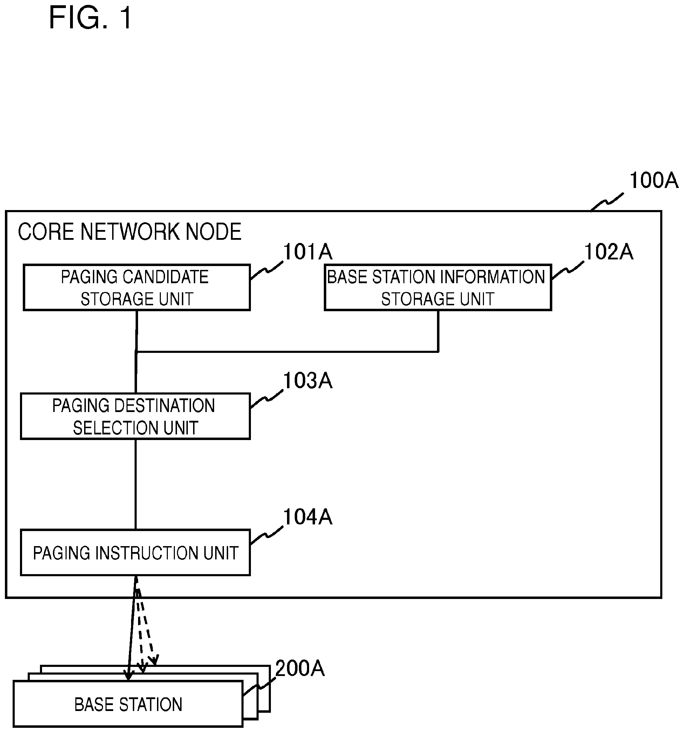

As illustrated in Fig. 1, an embodiment of the present invention can be realized by a core network node 100A including a paging candidate storage unit 101A, a base station information storage unit 102A, a paging destination selection unit 103A, and a paging instruction unit 104A.

The paging candidate storage unit 101A holds a candidate(s) of a base station(s) 200A as a paging message transmission destination(s). As the candidate(s) of the base station(s), a list of base stations having cells to which TAIs included in a TAI List of a terminal are allocated can be used.

The base station information storage unit 102A holds information a communication function(s) of the candidate(s) of the base station(s). Any communication function(s) may be used, as long as use of the communication function(s) can narrow down the base stations or exclude the base stations other than the paging base stations when a certain mobile station is paged. For example, the base station information storage unit 102A holds information that can determine a frequency(ies) supported by an individual base station. Of course, the base station information storage unit 102A may hold other information. For example, the base station information storage unit 102A may hold information indicating whether an individual base station has a function(s) corresponding to a communication function(s) of the target mobile station.

The paging destination selection unit 103A selects, when a certain mobile station is paged, a paging range from the candidate(s) of the base station(s) 200A, based on the communication function(s) of the candidate(s) of the base station(s). For example, when it is clear that the mobile station that needs to be paged supports only a certain frequency, the paging destination selection unit 103A selects a base station(s) or a cell(s) that supports the certain frequency as the paging destination.

The paging instruction unit 104A instructs a base station(s) that corresponds to the selected range to perform paging. For example, when it is clear that the paging-target mobile station supports only a certain frequency, the paging destination selection unit 103A selects, from a base station(s) as a paging message transmission destination(s), a base station(s) that supports the certain frequency as the paging destination(s). In this operation, the base stations or cells that do not support the certain frequency are excluded from the paging request destinations. In this way, the communication load on the core network node 100A and the base stations 200A can be reduced. In this case, if the rate of the paging performed on mobile terminals not supporting the certain frequency with respect to the number of occurrences of paging performed on all terminals is increased, the advantageous effect is improved further.

### [First example embodiment]

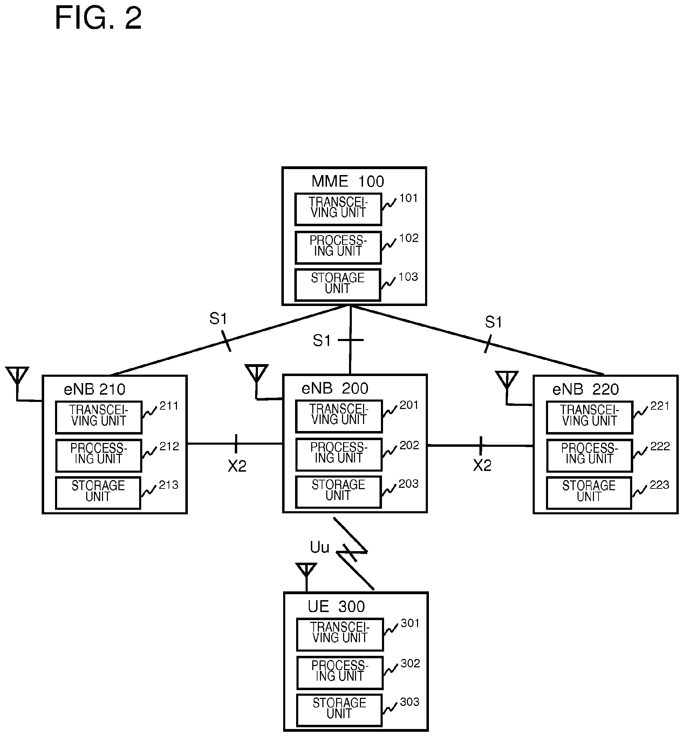

Next, a first example embodiment of the present invention will be described in detail with reference to drawings. Fig. 2 illustrates a configuration example of a mobile communication system according to the first example embodiment of the present invention. As illustrated in Fig. 2, the mobile communication system includes an MME 100, eNBs 200 to 220, and a UE 300.

The MME 100 includes a transceiving unit 101, a processing unit 102, and a storage unit 103. The MME 100 is a node that performs various kinds of management such as management of the location of the UE 300, calling, and handover between base stations (an example of the above core network node). In the invention, the MME 100 communicates with the eNBs 210 to 230 by using S1AP (S1 Application Protocol). Regarding the MME 100, the transceiving unit 101 transmits and receives information, the processing unit 102 generates and analyzes information received and transmitted, and the storage unit 103 holds information received and transmitted. The storage unit 103 corresponds to the above paging candidate storage unit 101A and base station information storage unit 102A. The transceiving unit 101 and the processing unit 102 function as the paging destination selection unit 103A and the paging instruction unit 104A.

Each of the eNBs 200 to 220 (corresponding to the above base station) includes a transceiving unit 201 (211,221), a processing unit 202 (212,222), and a storage unit 203 (213,223). The eNBs 200 to 220 exchange messages with the MME 100 by using S1AP. The eNBs 200 to 220 exchange messages with each other by using X2AP (X2 Application Protocol).

In addition, each of the eNBs 200 to 220 can communicate with the UE 300 via a Uu interface. Regarding the eNBs 200 to 220, the transceiving unit 201 transmits and receives information, the processing unit 202 generates and analyzes information transmitted and received, and the storage unit 203 holds information transmitted and received.

The UE 300 includes a transceiving unit 301, a processing unit 302, and a storage unit 303. The UE 300 wirelessly communicates with the eNB 200: the transceiving unit 301 transmits and receives information, the processing unit 302 generates and analyzes information transmitted and received, and the storage unit 303 holds information transmitted and received.

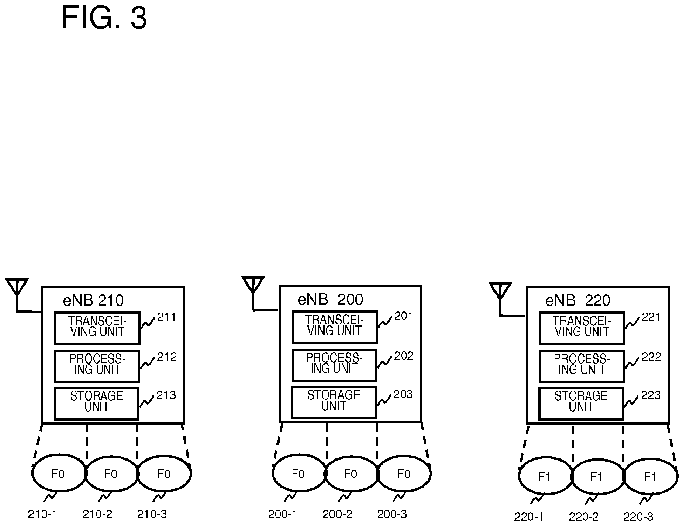

Fig. 3 illustrates cells created by the base stations according to the first example embodiment of the present invention. In the example in Fig. 3, all cells 200-1 to 200-3 created by the eNB 200 are operated at a frequency F0. In addition, all cells 210-1 to 210-3 created by the eNB 210 are also operated at the frequency F0. In contrast, all cells 220-1 to 220-3 created by the eNB 220 are operated at a frequency F1. The following description assumes that the frequency F0 is a frequency supported by the UE 300, which is an MTC terminal, and that the frequency F1 is a frequency not supported by the UE 300, which is an MTC terminal, but supported by MTC terminals other than the UE 300. Herein, the frequencies F0 and F1 may be supported by terminals other than the MTC terminals. In addition, the following description assumes that the UE 300 exists in the cell 200-1 of the eNB 200.

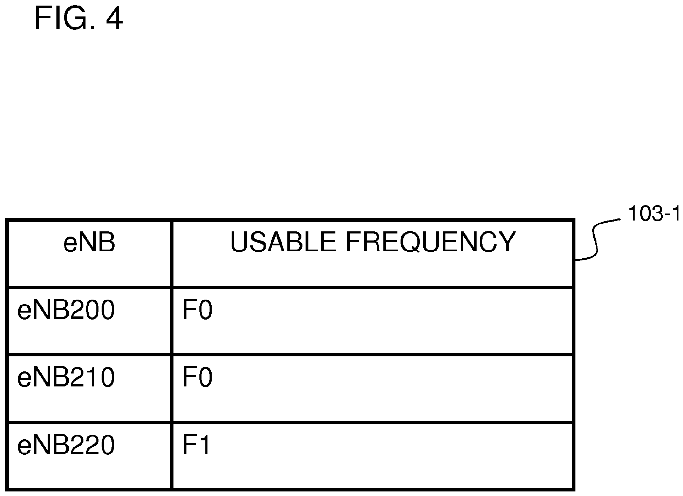

Fig. 4 illustrates an example of base station information held by the storage unit 103 of the MME 100 in the above case. In the example in Fig. 4, the frequencies that can be used by the respective eNBs 200 to 220 are stored. A method of collecting such base station information will be described along with an operation according to the present example embodiment.

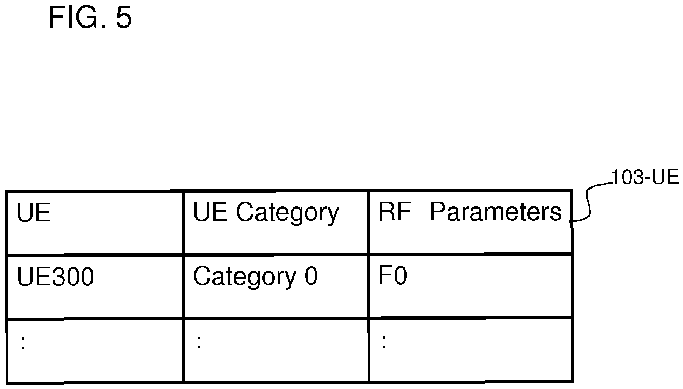

Fig. 5 illustrates an example of terminal information held by the storage unit 103 of the MME 100. In the example in Fig. 5, information about a terminal category and the frequency of the UE 300 are stored. In addition, in the example in Fig. 5, only the UE 300 is registered. This means that the UE 300 is a terminal that can be selected as a paging destination. A method of collecting such terminal information will be described along with an operation according to the present example embodiment.

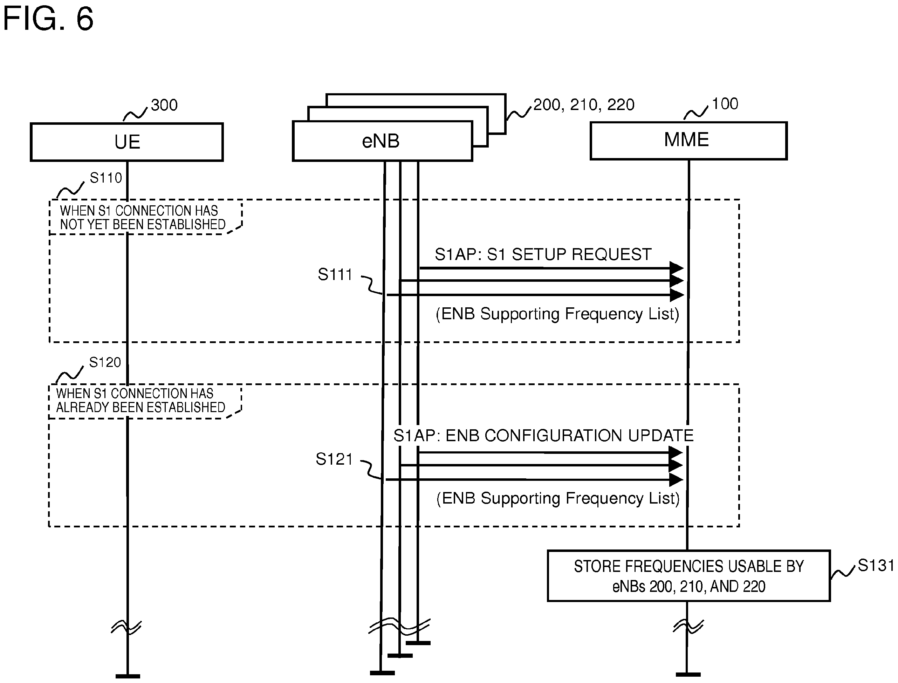

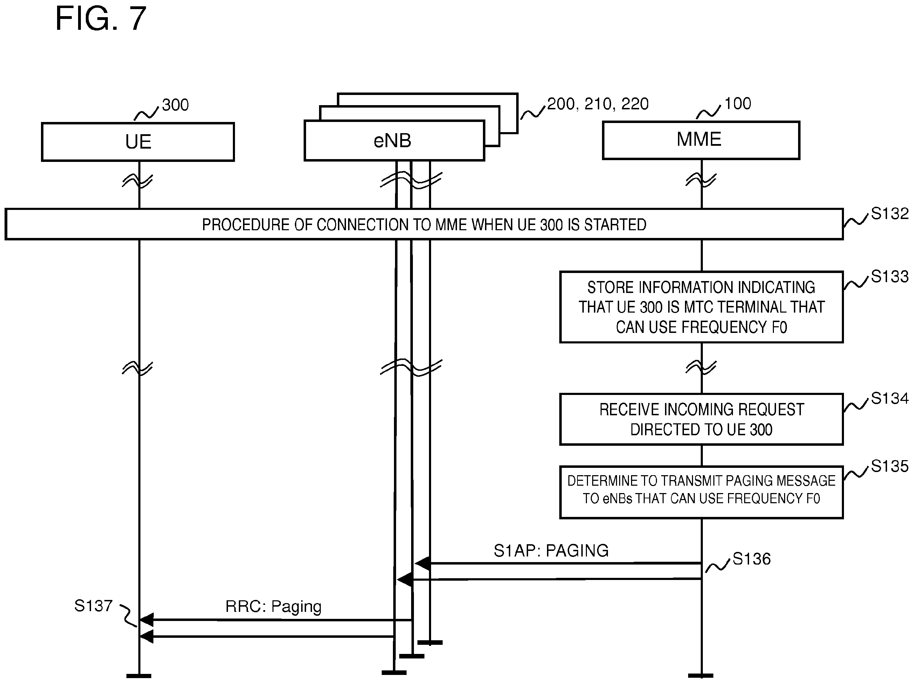

Next, an operation according to the present example embodiment will be described in detail with reference to drawings. Figs. 6 and 7 are sequence diagrams illustrating an operation according to the first example embodiment of the present invention. Hereinafter, an operation of the UE 300, the eNB 200, and the MME 100 will be described with reference to Figs. 6 and 7.

First, an operation flow in which the MME 100 acquires base station information in a state in which S1 connection has not been established between the eNB 200 and the MME 100 will be described with reference to Fig. 6 (see S110 in a dashed line in Fig. 6). In this case, the eNB 200 transmits an S1AP: S1 SETUP REQUEST message to the MME 100 (S111). The eNBs 210 and 220 operate in the same way as the eNB 200. The message is the first message that the individual eNB transmits to the MME after Transport Network Layer (TNL) connection is made available to establish S1 connection. Details of the message are described in NPL 3. The eNB 200 uses this message to notify the MME 100 of an information element called an ENB Supporting Frequency List, which includes information about all frequencies that can be used by the eNB 200. These items of information will be described in detail below.

In contrast, an operation flow performed when S1 connection has already been established between the eNB 200 and the MME 100 will be described (see S120 in a dashed line in Fig. 6). In this case, the eNB 200 transmits to an S1AP: ENB CONFIGURATION UPDATE message to the MME 100 (S121). The eNBs 210 and 220 operate in the same way as the eNB 200. Details of this S1AP: ENB CONFIGURATION UPDATE message are described in NPL 3. The eNB 200 uses this message to notify the MME 100 of an information element called an ENB Supporting Frequency List, which includes information about all frequencies that can be used by the eNB 200. These items of information will be described in detail below.

Next, the MME 100 refers to the ENB Supporting Frequency Lists in the above received S1AP messages and stores information indicating that the eNBs 200 and 210 can use the frequency F0 and the eNB 220 can use the frequency F1 in a table 103-1 of the storage unit 103 (S131). As described above, in this example, the information indicating that the eNBs 200 and 210 correspond to the frequency F0 and the eNB 220 corresponds to the frequency F1 is stored in the storage unit 103 of the MME 100 (see Fig. 4). This operation corresponds to the base station information acquisition unit.

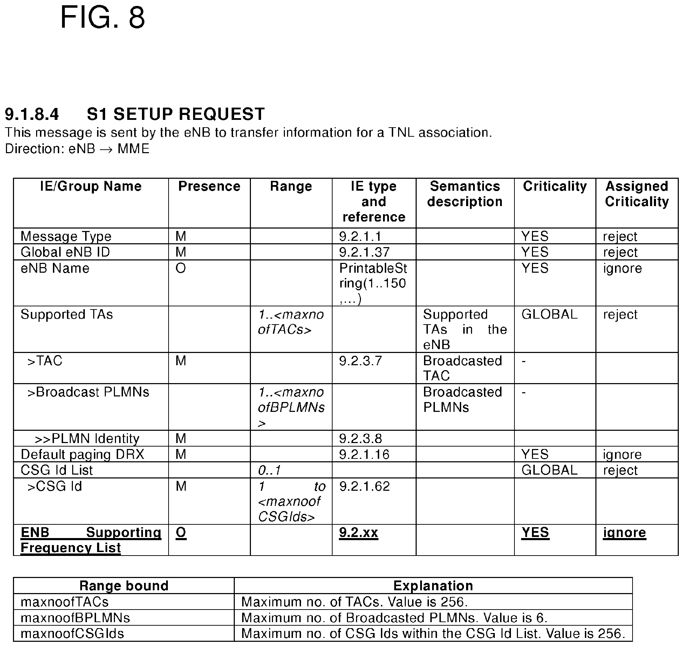

Next, the above information element eNB Identity and ENB Supporting Frequency List will be described with reference to Figs. 8 to 10.

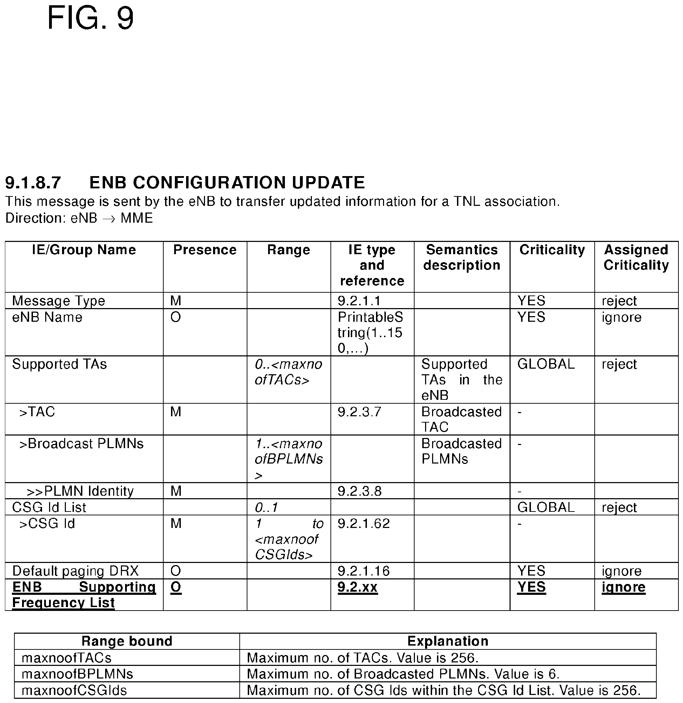

Fig. 8 illustrates an example of the information element ("IE") called the S1AP: S1 SETUP REQUEST message. Fig. 9 is an example of the IE called the S1AP: ENB CONFIGURATION UPDATE message. The ENB Supporting Frequency List included in either message will also be described in detail below.

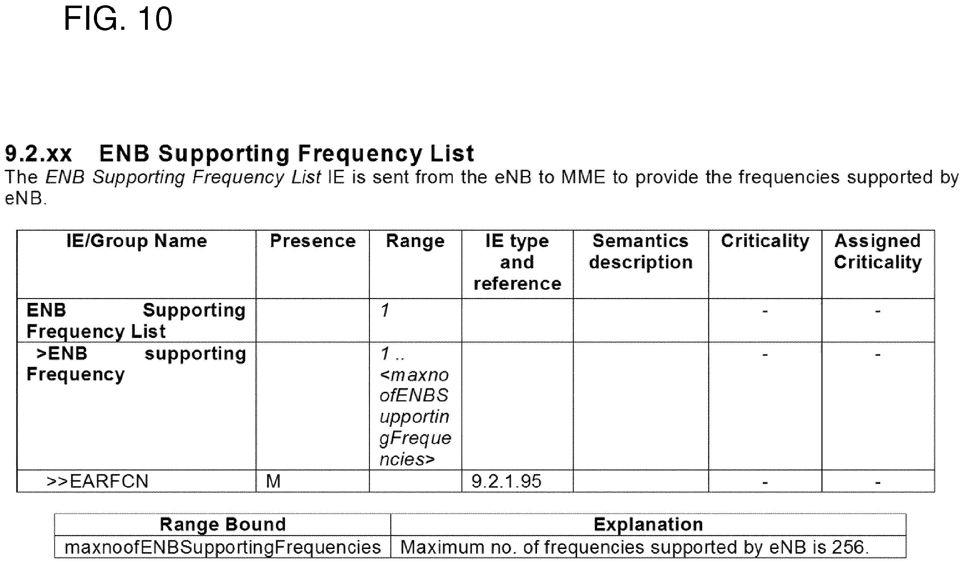

Fig. 10 illustrates details of the ENB Supporting Frequency List in Figs. 8 and 9. In the example in Fig. 10, the ENB Supporting Frequency List includes an E-UTRAN Absolute Radio-Frequency Channel Number ("EARFCN") of each frequency that can be used by the corresponding eNB (see the lowest row in the upper table in Fig. 10).

An operation flow performed when paging occurs according to the present example embodiment will be described with reference to Fig. 7. When started, the UE 300, which is an MTC terminal, performs a procedure of connection to the MME 100 (S132 in Fig. 7). For example, this connection procedure is described in "18 UE capabilities" on pages 150 and 151 of NPL 5. The MME 100 refers to an information element "UE Radio Capability," which has been acquired from the UE 300 in S132 and which describes capabilities of the UE 300, and holds information indicating that the UE 300 is classified into Category 0 (this signifies that the UE 300 is an MTC terminal) and that the UE 300 supports the frequency F0 (S133). Herein, the information indicating that the UE 300 is a terminal classified into Category 0 and supporting the frequency F0 is stored in the storage unit 103 of the MME 100 (see Fig. 5). The UE Radio Capability is described in 3GPP TS 36.306 version 12.3.0 (see "4.1 ue-Category" and "4.3.5 RF parameters" in particular).

Next, the MME 100 receives an incoming request directed to the UE 300 from an MTC-InterWorking Function (MTC-IWF) not illustrated in Fig. 7, the MTC-IWF being defined in 3GPP TS23.682 v13.0.0 (S134). The MME 100 can determine whether the UE to which the incoming request is directed is the UE 300 by referring to the table 103-UE holding the terminal information in Fig. 5.

When receiving the incoming request, the MME 100 refers to UE location registration information and determines eNBs having cells to which TAIs included in a TAI List of the UE 300 are allocated. In addition, the MME 100 refers to the table 103-1 and determines whether any of the determined eNBs can use the frequency F0 supported by the UE 300. In this example, the MME 100 determines that the eNBs 200 and 210 are the matching eNBs and determines to transmit a paging message to the eNBs 200 and 210 (S135).

Next, the MME 100 transmits a paging message to the eNBs 200 and 210 (S136). Details of the S1AP: PAGING message are described in NPL 3.

Next, the eNBs 200 and 210 transmit an RRC Paging message to the cells operated at currently used frequencies among the usable frequencies. In the present example embodiment, the eNB 200 transmits a paging message to the cells 200-1, 200-2, and 200-3, and the eNB 210 transmits a paging message to the cells 210-1, 210-2, and 210-3 (S137).

As described above, the MME 100 according to the first example embodiment determines eNBs having cells to which TAIs included in a TAI List of the paging message transmission destination UE are allocated. Next, the MME 100 selects eNBs as the paging message transmission destinations based on the frequencies usable by the eNBs (namely, the eNBs that do not match the frequency supported by the UE are excluded from the paging destinations). Thus, compared with the case in which the MME transmits a paging message to all eNBs having cells to which TAIs included in a TAI List of the paging message transmission destination UE are allocated, the number of paging messages can significantly be reduced. Consequently, paging messages transmitted to MTC terminals that are integrated with sensors and that can be installed anywhere do not increase the processing load on the MME, the communication load on the individual S1 interface, the processing load on the individual eNB, and the communication load on the individual Uu interface. Namely, convenience of normal users is not deteriorated.

### [Second example embodiment]

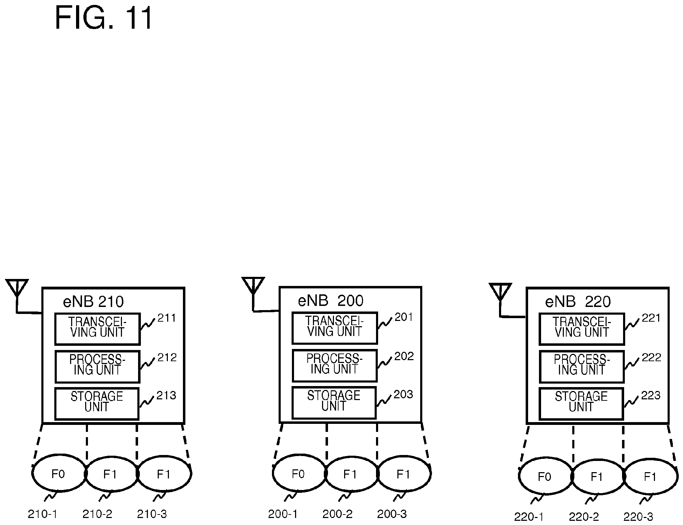

Next, a second example embodiment will be described in detail with reference to drawings. The second example embodiment is achieved by adding a paging destination selection function per cell to the first example embodiment of the present invention. Since an overall configuration is the same as that according to the first example embodiment, the following description will be made with a focus on the difference between the first and second example embodiments. Fig. 11 illustrates cells created by base stations according to the second example embodiment of the present invention. The present example embodiment assumes that, among the cells created by an eNB 200, a cell 200-1 is operated at a frequency F0 and cells 200-2 and 200-3 are operated at a frequency F1. Likewise, the present example embodiment assumes that, among the cells created by an eNB 210, a cell 210-1 is operated at the frequency F0 and cells 210-2 and 210-3 are operated at the frequency F1. Likewise, the present example embodiment assumes that, among the cells created by an eNB 220, a cell 220-1 is operated at the frequency F0 and cells 220-2 and 220-3 are operated at the frequency F1.

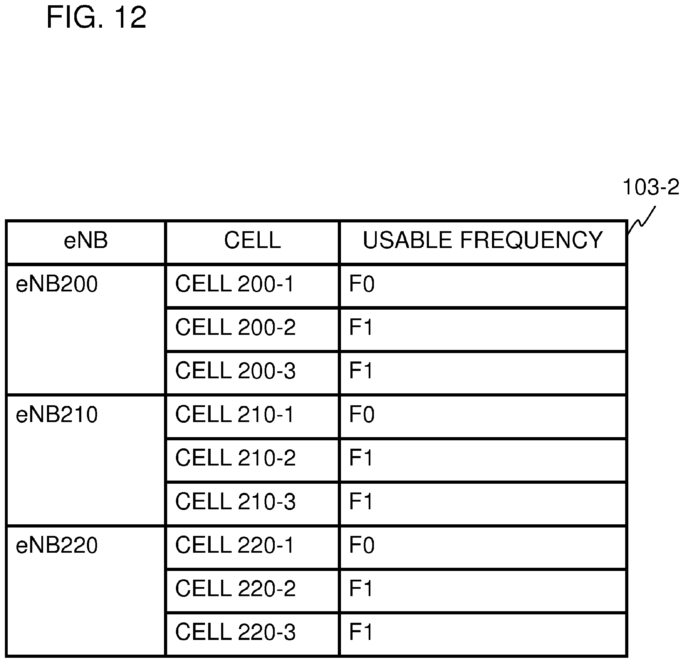

Fig. 12 illustrates an example of base station information held by an MME 100 according to the second example embodiment of the present invention. As illustrated in Fig. 12, information about the frequencies of the cells created by the eNBs 200 to 220 can be stored.

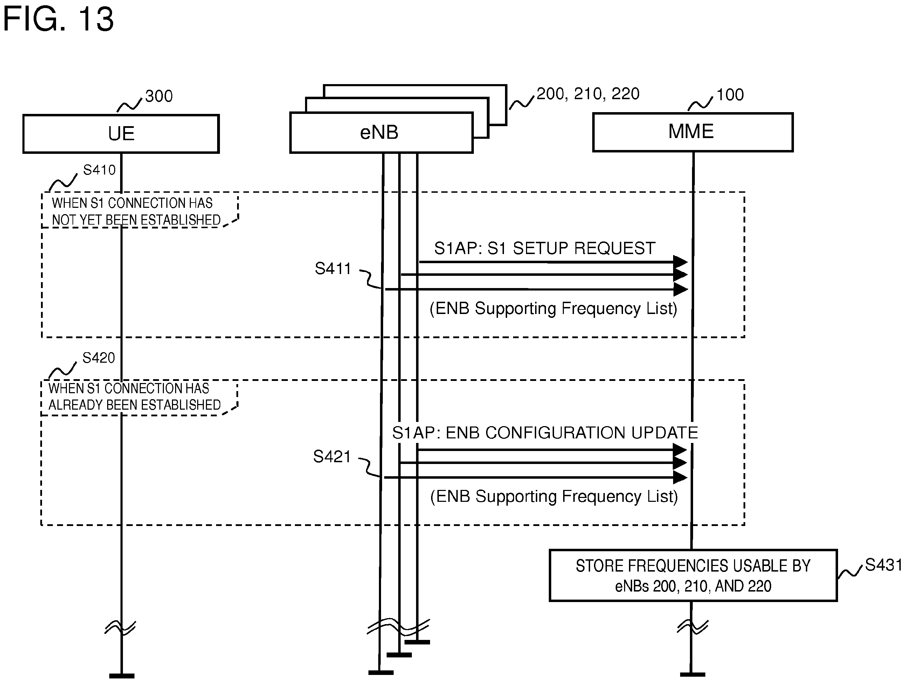

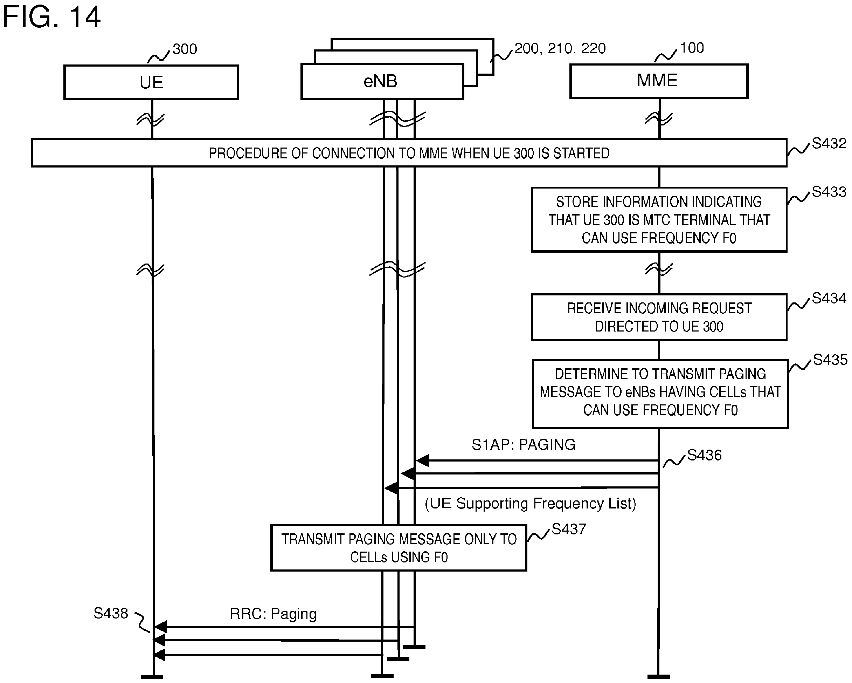

Next, an operation according to the present example embodiment will be described in detail with reference to drawings. Figs. 13 and 14 are sequence diagrams illustrating an operation according to the second example embodiment of the present invention. Hereinafter, an operation of a UE 300, the eNB 200, and the MME 100 will be described with reference to Figs. 13 and 14.

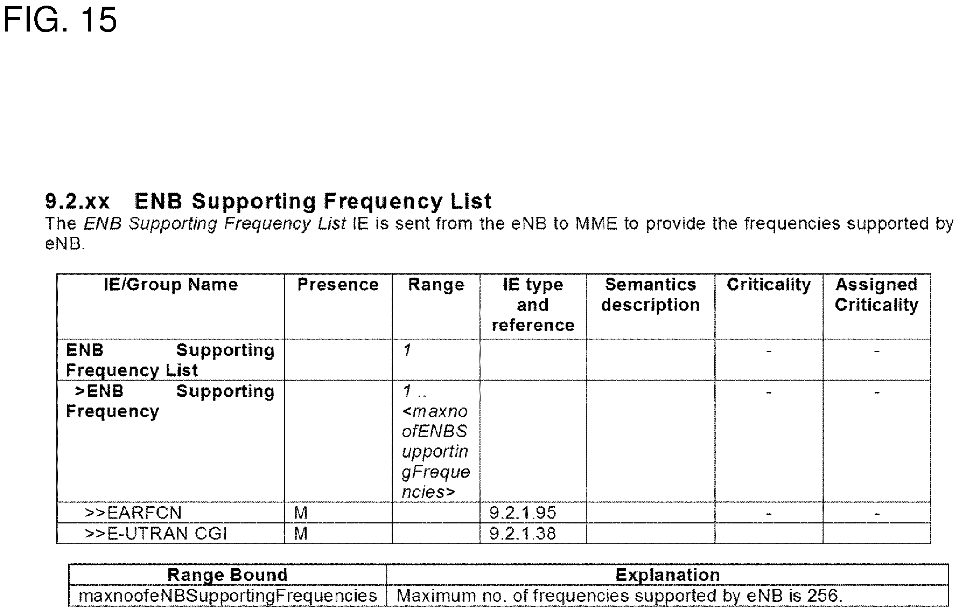

S410 and S420 in Fig. 13 correspond to S110 and S120 in Fig. 6, respectively. Fig. 15 illustrates an information element called an ENB Supporting Frequency List included in an S1AP: S1 SETUP REQUEST message or an S1AP: ENB CONFIGURATION UPDATE message transmitted from an eNB to the MME according to the present example embodiment. As illustrated in Fig. 15, in addition to the information element ENB Supporting Frequency List according to the first example embodiment in Fig. 10, an E-UTRAN CGI (Cell Global ID) is included as a cell identifier (see the lowest row in the upper table in Fig. 15).

Next, the MME 100 refers to the ENB Supporting Frequency List in the above received S1AP messages and stores information indicating that, among the cells created by the eNB 200, the cell 200-1 uses the frequency F0 and the cells 200-2 and 200-3 use the frequency F1 in a table 103-2 of a storage unit 103. Likewise, the MME 100 stores information indicating that, among the cells created by the eNB 210, the cell 210-1 uses the frequency F0 and the cells 210-2 and 210-3 use the frequency F1 in the table 103-2 of the storage unit 103. Likewise, the MME 100 stores information indicating that, among the cells created by the eNB 220, the cell 220-1 uses the frequency F0 and the cells 220-2 and 220-3 use the frequency F1 in the table 103-2 of the storage unit 103 (S431).

Next, the subsequent processing will be described with reference to Fig. 14. S432 to S434 in Fig. 14 are the same as S132 to S134 in Fig. 7. When receiving an incoming request in S434, the MME 100 refers to UE location registration information and determines eNBs having cells to which TAIs included in a TAI List of the UE 300 are allocated. Next, the MME 100 refers to the table 103-2 in Fig. 12 and determines whether any of the determined eNBs has cells that can use the frequency F0 supported by the UE 300. In this example, the MME 100 determines that the cells 200-1, 210-1, and 220-1 of the eNBs 200 to 220 are the matching cells and determines to transmit a paging message specifying the paging cells to the eNBs 200, 210, and 220 (S435).

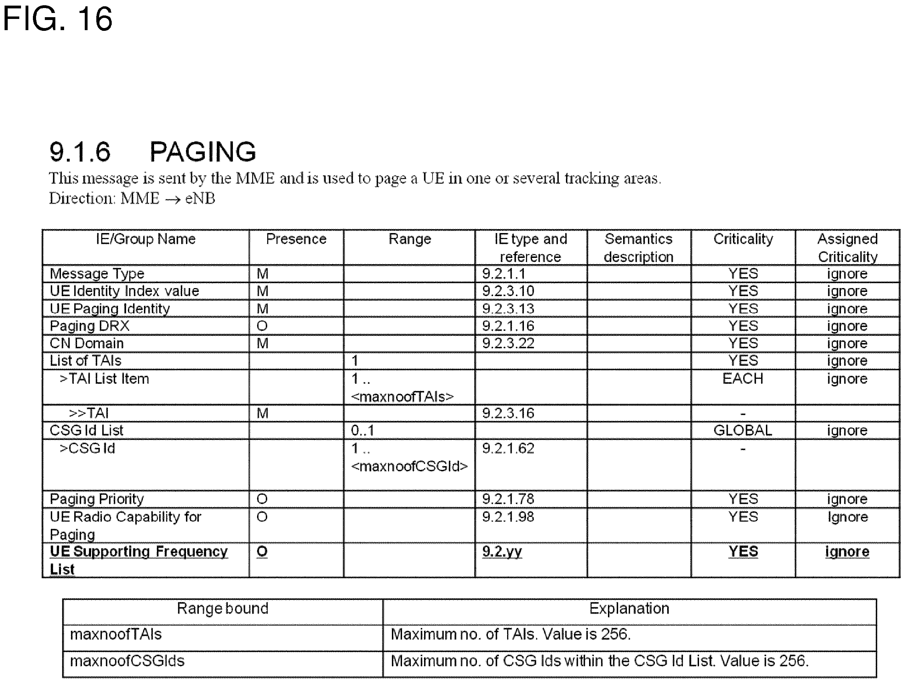

Next, the MME 100 transmits a paging message to the eNBs 200, 210, 220 (S436). Details of the S1AP: PAGING message are described in NPL 3. Fig. 16 illustrates an example of the S1AP: PAGING message transmitted in S436. As illustrated in Fig. 16, an information element UE Supporting Frequency List is added so that an eNB that has received the S1AP: PAGING message can determine cells to which a paging message needs to be transmitted.

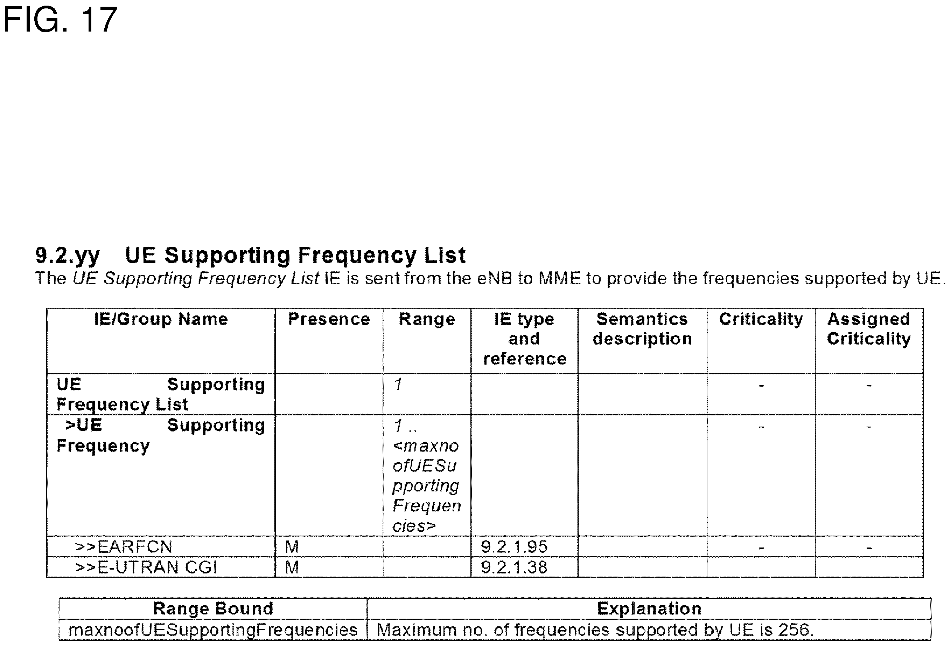

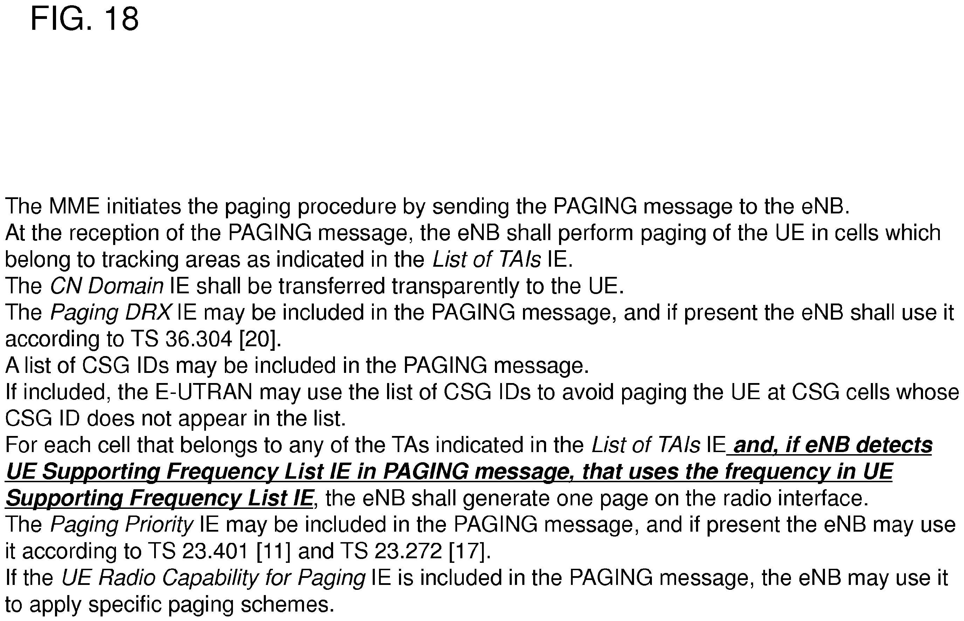

Fig. 17 illustrates details of the information element UE Supporting Frequency List. In the example in Fig. 17, in addition to the EARFCN of each frequency that can be used by the corresponding UE, the UE Supporting Frequency List includes an E-UTRAN CGI (see the lowest row in the upper table in Fig. 17). The eNBs 200 to 220 refer to this E-UTRAN CGI and determines a cell(s) to which a paging message is transmitted. Fig. 18 illustrates a difference between the second example embodiment of the present invention and NPL 3. To sum it up, the processing in S436 in Fig. 14 can be realized by adding a bold and italic passage underlined in Fig. 18 to "8.5.2 Successful Operation" in NPL 3 (if an eNB detects an information element UE Supporting Frequency List in a paging message, the eNB determines a cell(s) using the corresponding frequency (to be a paging target)).

Next, the eNBs 200 to 220 receive the UE Supporting Frequency Lists in the S1AP: PAGING messages and determine the cells 200-1, 210-1, 220-1 to be the cells to which a paging message needs to be transmitted, respectively (S437). Next, the eNBs 200 to 220 transmit an RRC: Paging message to the cells 200-1, 210-1, and 220-1, respectively (S438).

As described above, according to the present example embodiment, the paging range can be determined per cell, not per eNB. In this way, the present example embodiment can reduce the processing load on the individual eNB and the communication load on the individual Uu interface even more than the first example embodiment. The following specific example will be described based on a case in which the technique according to the first example embodiment is applied to the configuration according to the second example embodiment. In this case, the eNBs 200 to 220 can use the frequencies F0 and F1 and are using the frequencies F0 and F1. Thus, a paging message is also transmitted to the cells 200-2, 200-3, 210-2, 210-3, 220-2, and 220-3, which are operated at the frequency supported by MTC terminals other than the UE 300. The second example embodiment is advantageous in that such unnecessary transmission of the paging message can be reduced even more.

### [Third example embodiment]

Next, a third example embodiment will be described in detail with reference to drawings. In the third example embodiment, instead of the frequencies, information that can determine the frequencies is stored as the base station information, and a paging destination(s) is selected based on the corresponding value(s). Since an overall configuration is the same as that according to the first example embodiment, the following description will be made with a focus on the difference between the first and third example embodiments. The present example embodiment assumes that a frequency F0 belongs to E-UTRA Operating Band 1 in Table 5.5-1 in 3GPP TS36.101 v12.6.0 and that a frequency F1 belongs to E-UTRA Operating Band 5.

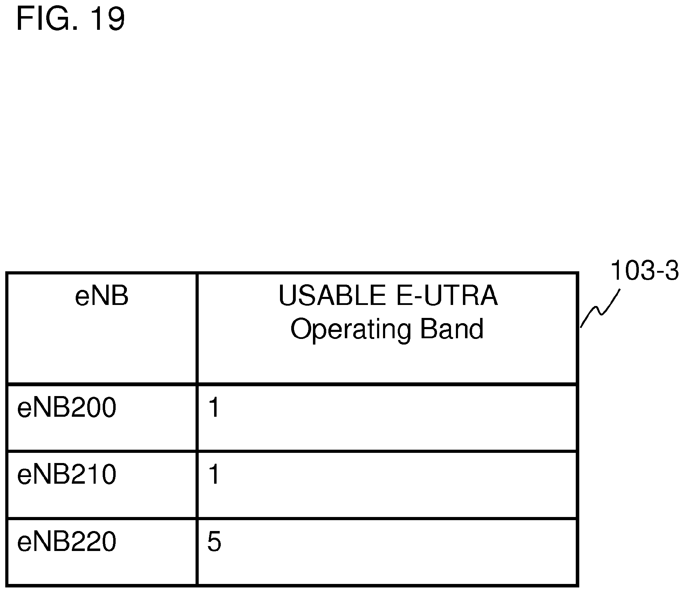

Fig. 19 illustrates an example of base station information held by an MME 100 according to the third example embodiment of the present invention. As illustrated in Fig. 19, E-UTRA Operating Bands of eNBs 200 to 220 can be stored.

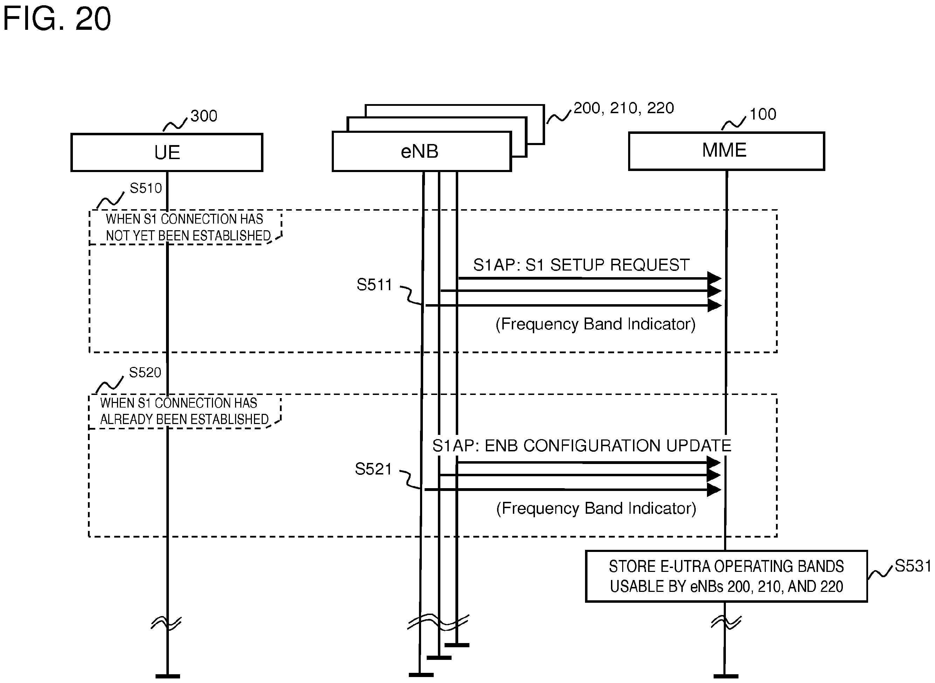

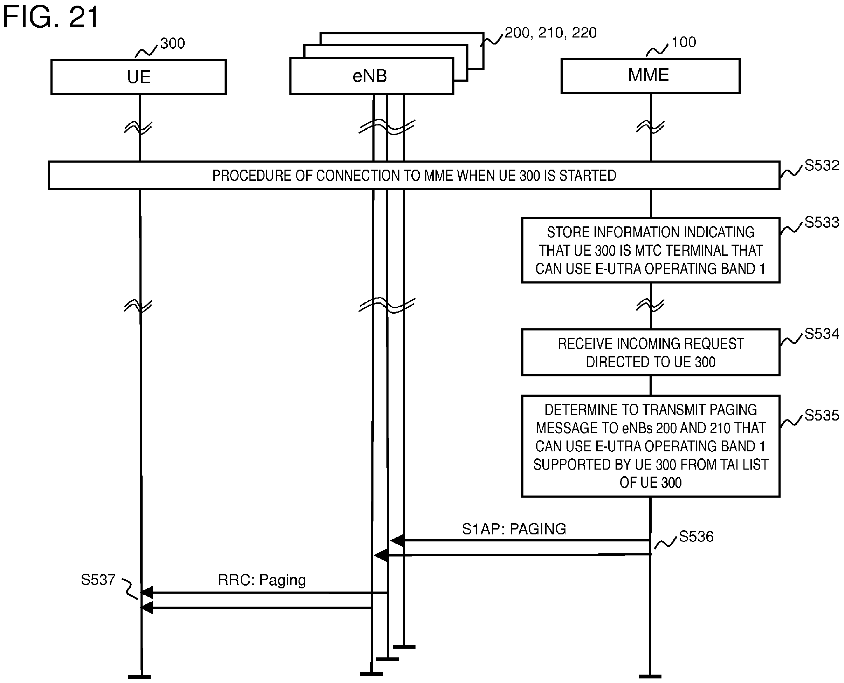

Next, an operation according to the present example embodiment will be described in detail with reference to drawings. Figs. 20 and 21 are sequence diagrams illustrating an operation according to the third example embodiment of the present invention. Hereinafter, an operation of a UE 300, the eNB 200, and the MME 100 will be described with reference to Figs. 20 and 21.

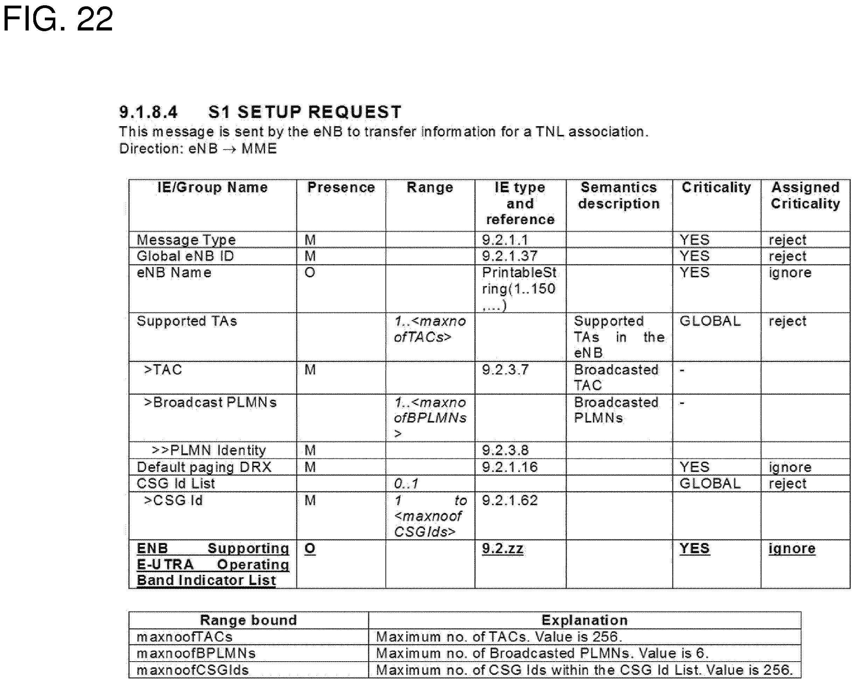

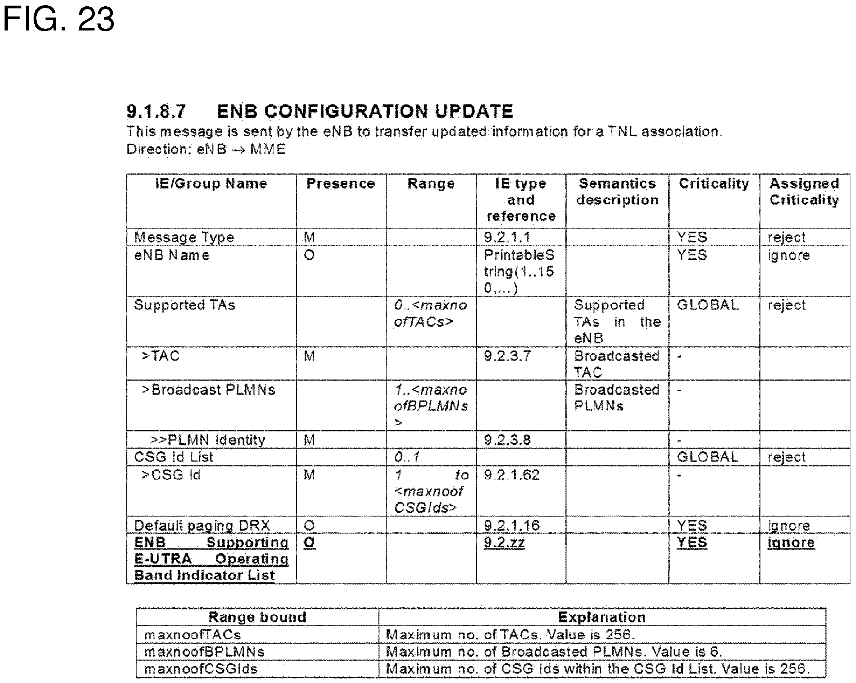

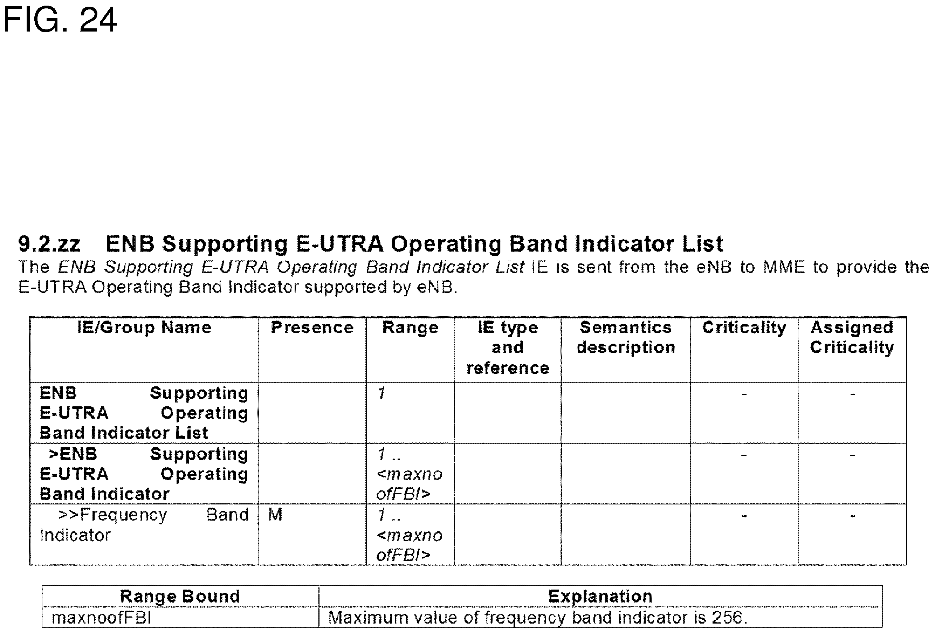

S510 and S520 in Fig. 20 basically match S110 and S120 in Fig. 6, respectively. However, as illustrated in Figs. 22 and 23, an information element called an ENB Supporting E-UTRA Operating Band Indicator List illustrated in Fig. 24 is included in an S1AP: S1 SETUP REQUEST message and an S1AP: ENB CONFIGURATION UPDATE message. Among the values of the E-UTRA Operating Band in Table 5.5-1 in 3GPP TS36.101 v12.6.0, one or more values usable by the corresponding eNB are stored in a list format in the ENB Supporting E-UTRA Operating Band Indicator List (see the upper table in Fig. 24).

Next, the MME 100 refers to the ENB Supporting E-UTRA Operating Band Indicator Lists in the above received S1AP messages and stores information indicating that the eNBs 200 and 210 can use E-UTRA Operating Band 1 and the eNB 220 can use E-UTRA Operating Band 5 in a table 103-3 of a storage unit 103 (S531).

Next, the subsequent processing will be described with reference to Fig. 21. S532 to S534 in Fig. 21 are the same as S132 to S134 in Fig. 7, except that, in response to the result of the UE connection procedure in S532, the MME 100 stores information indicating that the UE 300 is using E-UTRA Operating Band 1 in S533. In S534, the MME 100 receives an incoming request, refers to UE location registration information, and determines eNBs having cells to which TAIs included in a TAI List of the UE 300 are allocated. In addition, the MME 100 refers to the table 103-3 in Fig. 19 and determines whether any of the determined eNBs can use the E-UTRA Operating Band supported by the UE 300. In this example, the MME 100 refers to the table 103-3 in Fig. 19 and determines to transmit a paging message to the eNBs 200 and 210 that can use E-UTRA Operating Band 1 among the eNBs 200 to 220 (S535).

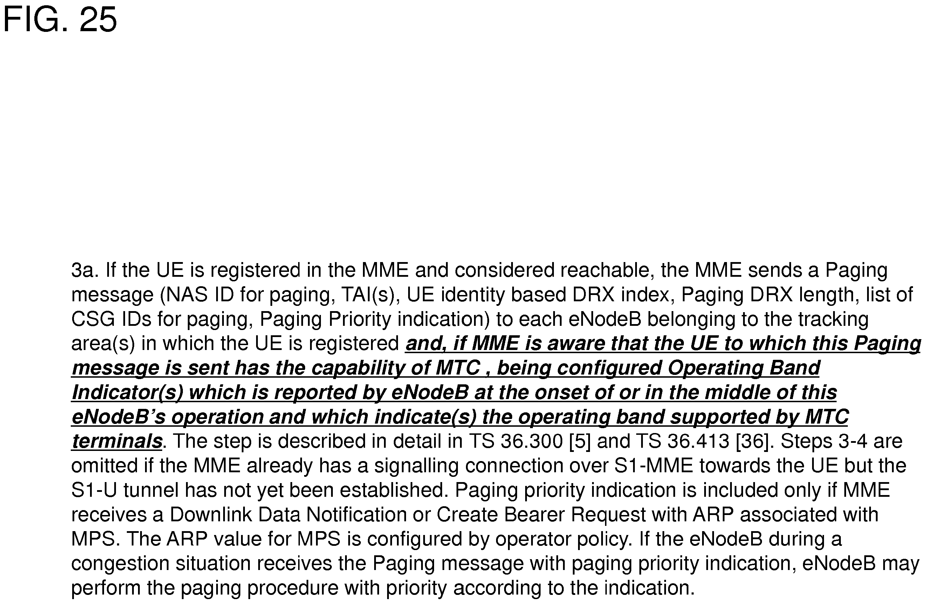

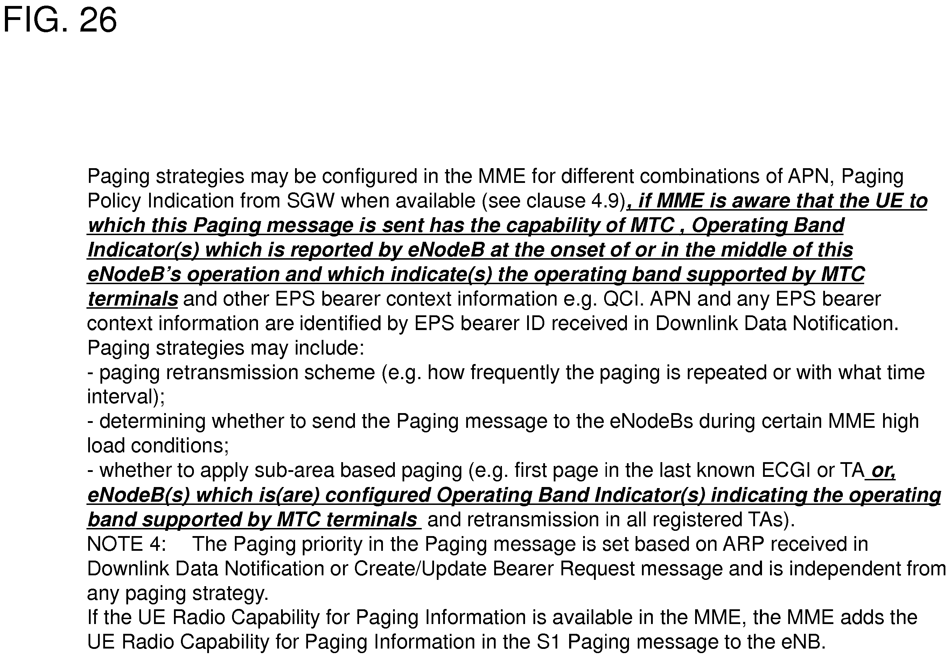

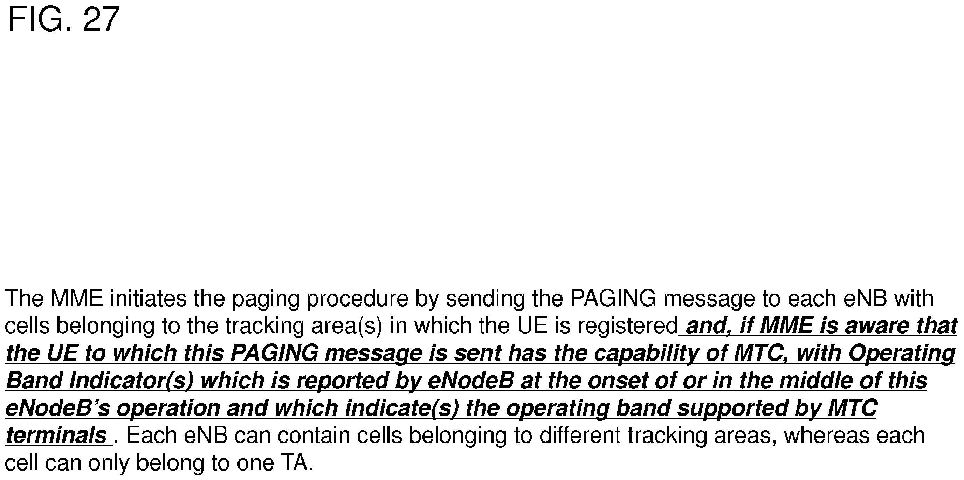

The processing in S535 in Fig. 21 can be realized by adding bold and italic passages underlined in Fig. 25 to 27 to "5.3.4.3 Network Triggered Service Request" in NPL 4 and "19.2.2 S1 Interface Signalling Procedures" in NPL 5. In Figs. 25 and 26, a paging policy (Strategy) of the MME is added to section 3a (two portions) in "5.3.4.3 Network Triggered Service Request" in NPL 4. The paging policy indicates that a paging destination eNodeB(s) can be selected based on the Operating Band which is indicated by the Operating Band Indicator reported by an eNodeB and which is supported by the target MTC terminal. In Fig. 27, a like content is added to section "19.2.2.1 Paging procedure" in "19.2.2 S1 Interface Signalling Procedures" in NPL 5.

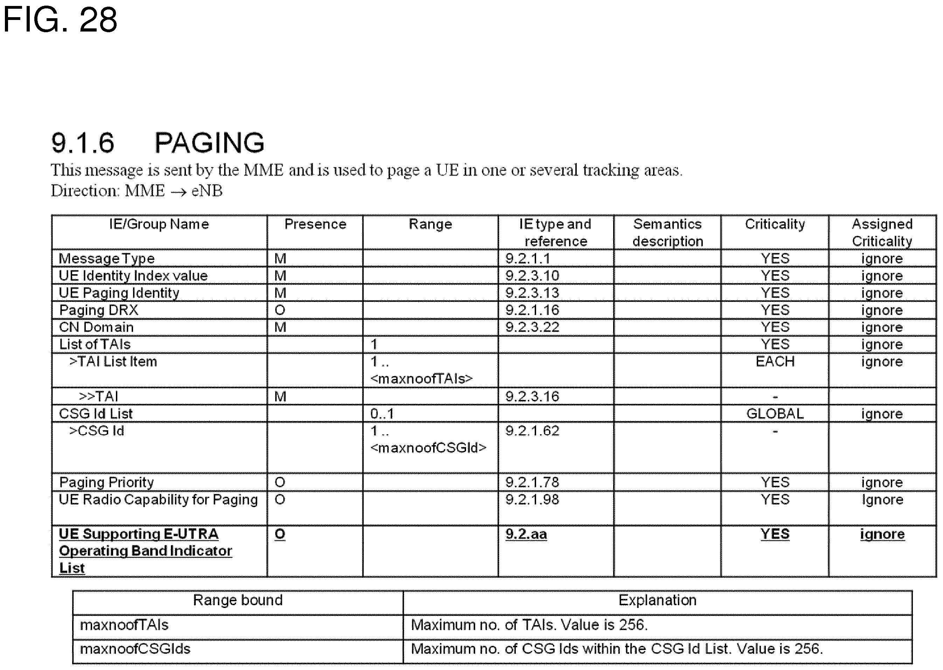

Next, the MME 100 transmits a paging message to the eNBs 200 and 210 (S536). Details of the S1AP: PAGING message are described in NPL 3. Fig. 28 illustrates an example of the S1AP: PAGING message transmitted in S536. As illustrated in Fig. 28, the S1AP: PAGING message includes an information element UE Supporting E-UTRA Operating Band Indicator List indicating that the UE 300 supports E-UTRA Operating Band 1.

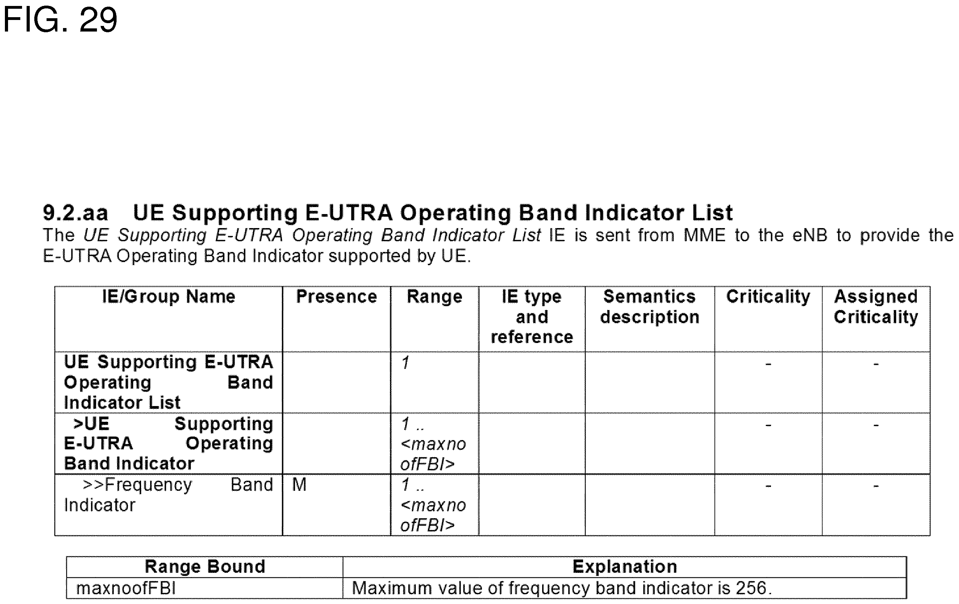

Fig. 29 illustrates details of the information element UE Supporting E-UTRA Operating Band Indicator List. In the example in Fig. 29, as with Fig. 24, among the values of the E-UTRA Operating Band in Table 5.5-1 in 3GPP TS36.101 v12.6.0, one or more values usable by the corresponding UE are stored in a list format in the UE Supporting E-UTRA Operating Band Indicator List.

Next, each of the eNBs 200 and 210 refers to the UE Supporting E-UTRA Operating Band Indicator List in its received S1AP: PAGING message and transmits an RRC Paging message to the cells created at the frequency included in E-UTRA Operating Band 1 among the currently used frequencies. According to the present example embodiment, the eNB 200 transmits a paging message to the cells 200-1, 200-2, and 200-3, and the eNB 210 transmits a paging message to the cells 210-1, 210-2, and 210-3 (S537).

As described above, the present example embodiment can achieve an advantageous effect equivalent to that achieved according the first example embodiment while using, instead of the frequencies, the information elements called the E-UTRA Operating Band Indicators. The above second and third example embodiments may be combined with each other. In this way, paging can be instructed per cell by using the E-UTRA Operating Band Indicators.

### [Fourth example embodiment]

Next, a fourth example embodiment will be described in detail with reference to drawings. In the fourth example embodiment, instead of the frequencies, information indicating a communication methods or the like of individual base stations are stored as the base station information, and a paging destination(s) is selected based on this information. Since an overall configuration is the same as that according to the first example embodiment, the following description will be made with a focus on the difference between the first and fourth example embodiments. The present example embodiment assumes that, regarding base stations 200 and 210, the Duplex mode is Half-Duplex Frequency Division Duplex (HD-FDD), the frequency bandwidth is 1.4 MHz, and the MIMO antenna configuration is 1 × 1. The present example embodiment also assumes that, regarding an eNB 220, the Duplex mode is FDD, the frequency bandwidth is 20 MHz, and the MIMO antenna configuration is 2 × 2. Also, the present example embodiment assumes that a UE 300 cannot connect to the eNB 220. In addition, as in the first and third example embodiments, the UE 300 can connect to the base stations 200 and 210. In addition, "MIMO" is the abbreviation of Multiple-Input and Multiple-Output. The above information elements indicating the communication methods, etc. of the base stations are only examples. The UE 300, which is an MTC terminal, may use another Duplex mode, frequency bandwidth, and MIMO configuration.

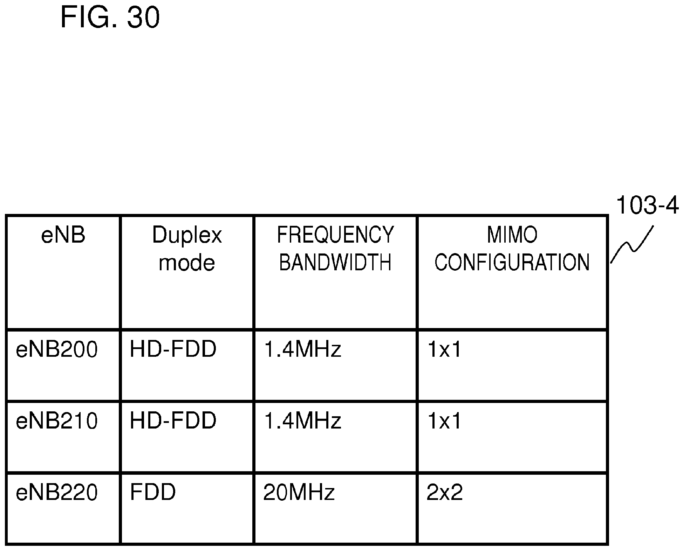

Fig. 30 illustrates an example of base station information held by an MME 100 according to the fourth example embodiment of the present invention. As illustrated in Fig. 30, the MME 100 can hold the above Duplex modes, frequency bandwidths, MIMO configurations of the eNBs 200 to 220.

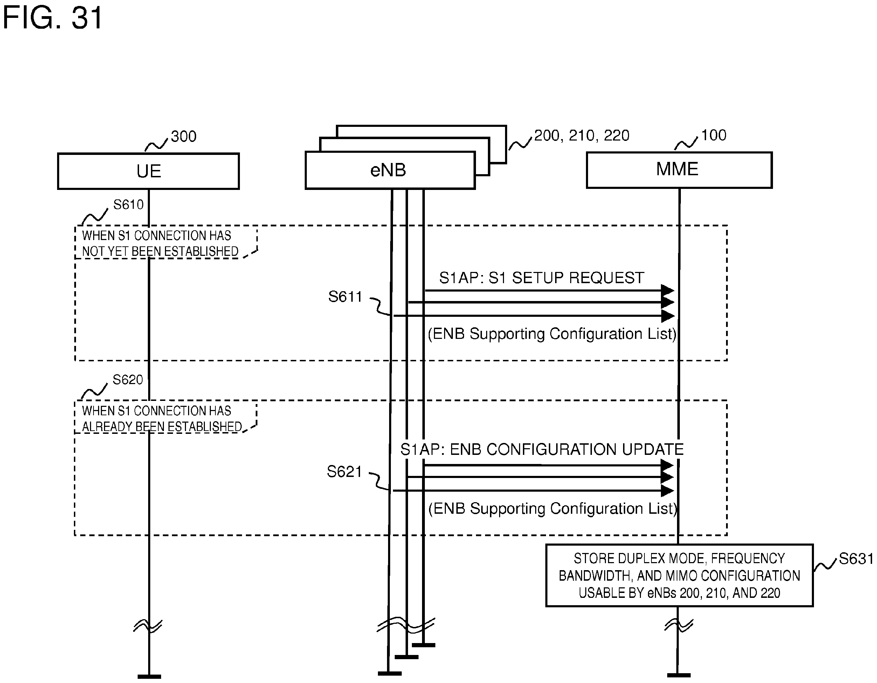

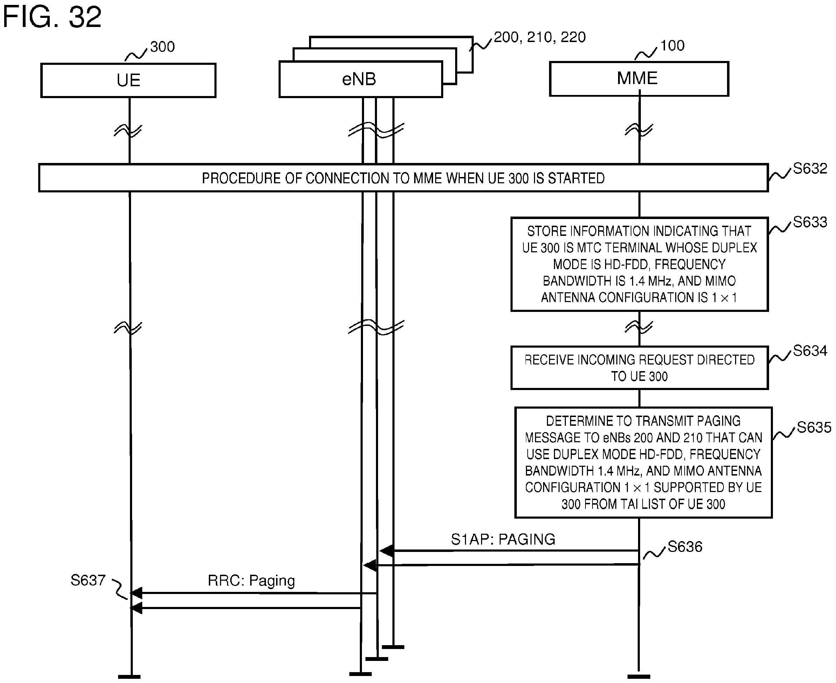

Next, an operation according to the present example embodiment will be described in detail with reference to drawings. Figs. 31 and 32 are sequence diagrams illustrating an operation according to the fourth example embodiment of the present invention. Hereinafter, an operation of the UE 300, the eNB 200, and the MME 100 will be described with reference to Figs. 31 and 32.

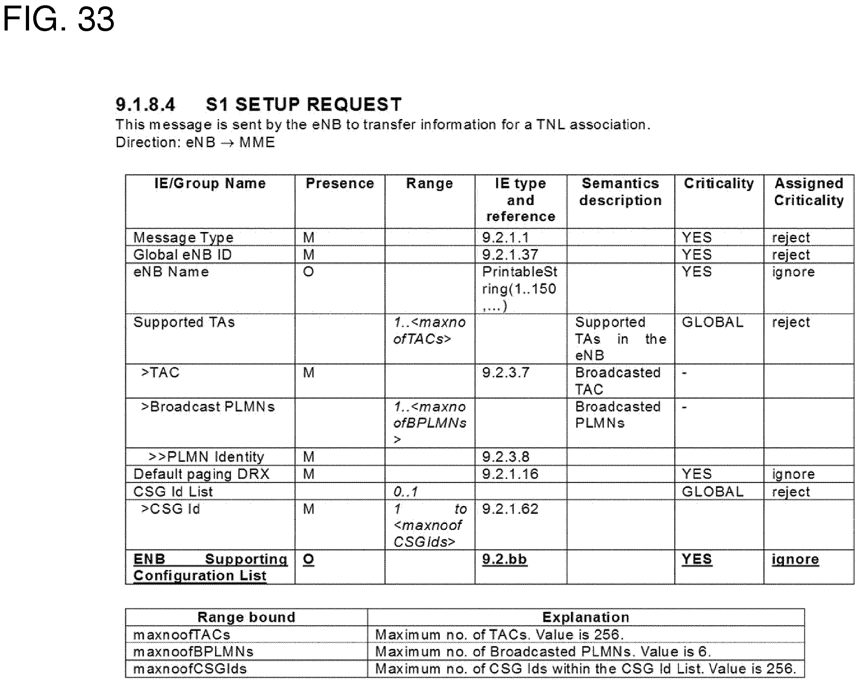

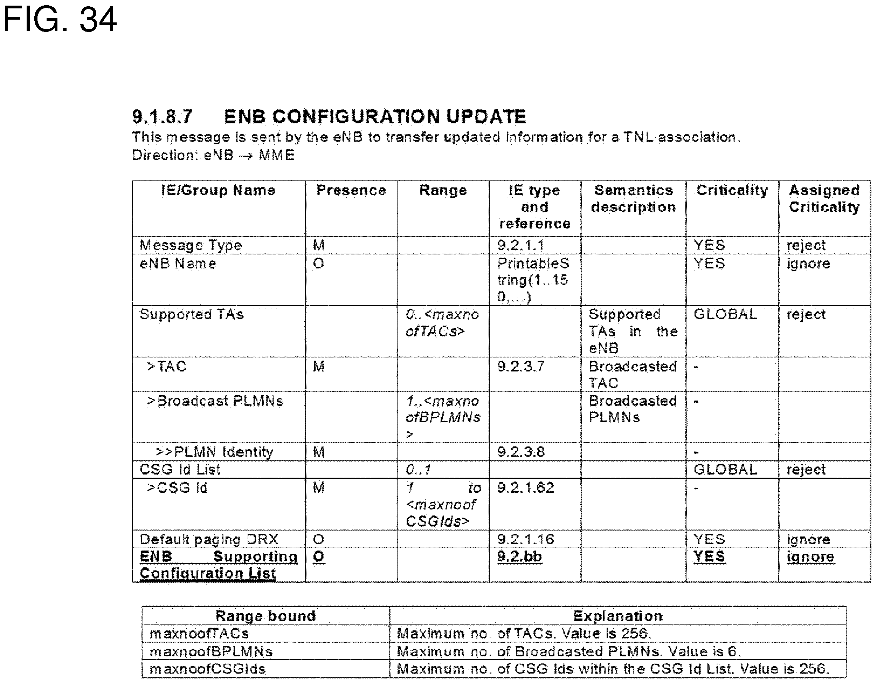

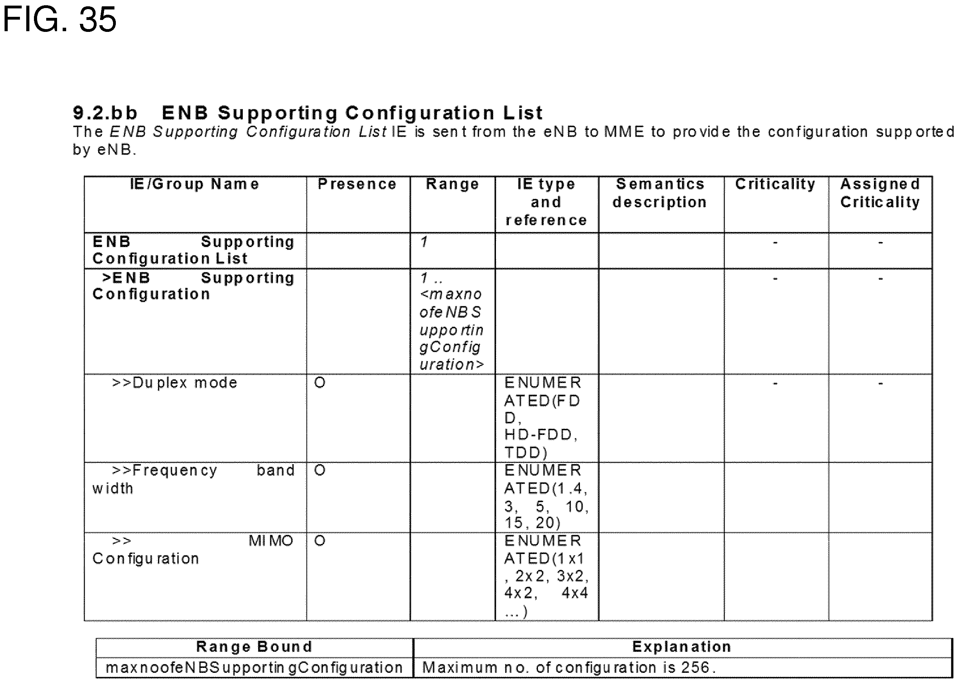

S610 and S620 in Fig. 31 basically match S110 and S120 in Fig. 6, respectively. However, as illustrated in Figs. 33 and 34, an information element called an ENB Supporting Configuration List illustrated in Fig. 35 is included in an S1AP: S1 SETUP REQUEST message and an S1AP: ENB CONFIGURATION UPDATE message. The ENB Supporting Configuration List includes a Duplex mode, a frequency bandwidth, and a MIMO antenna configuration supported by the corresponding eNB (see the upper table in Fig. 35).

Next, the MME 100 refers to the ENB Supporting Configuration Lists of the received S1AP messages and stores information indicating that the eNBs 200 and 210 support the Duplex mode HD-FDD, the frequency bandwidth 1.4 MHz, and the MIMO antenna configuration 1 × 1 and that the eNB 220 supports the Duplex mode FDD, the frequency bandwidth 20 MHz, and the MIMO antenna configuration 2 × 2 in a table 103-4 of a storage unit 103 (S631).

Next, the subsequent processing will be described with reference to Fig. 32. S632 to S634 in Fig. 32 are the same as S132 to S134 in Fig. 7, except that, in response to the result of the UE connection procedure in S632, the MME 100 stores information indicating that the UE 300 supports the Duplex mode HD-FDD, the frequency bandwidth 1.4 MHz, and the MIMO antenna configuration 1 × 1 in S633. In S634, the MME 100 receives an incoming request, refers to UE location registration information, and determines eNBs having cells to which TAIs included in a TAI List of the UE 300 are allocated. In addition, the MME 100 refers to the table 103-4 in Fig. 30 and determines whether any of the determined eNBs uses the communication method supported by the UE 300, namely, any eNB capable of using the above Duplex mode, frequency bandwidth, and MIMO antenna configuration. Herein, the MME 100 refers to the table 103-4 in Fig. 30 and determines to transmit a paging message to the eNBs 200 and 210 that can use the Duplex mode, the frequency bandwidth, and the MIMO configuration supported by the UE 300, among the eNBs 200 to 220 (S635).

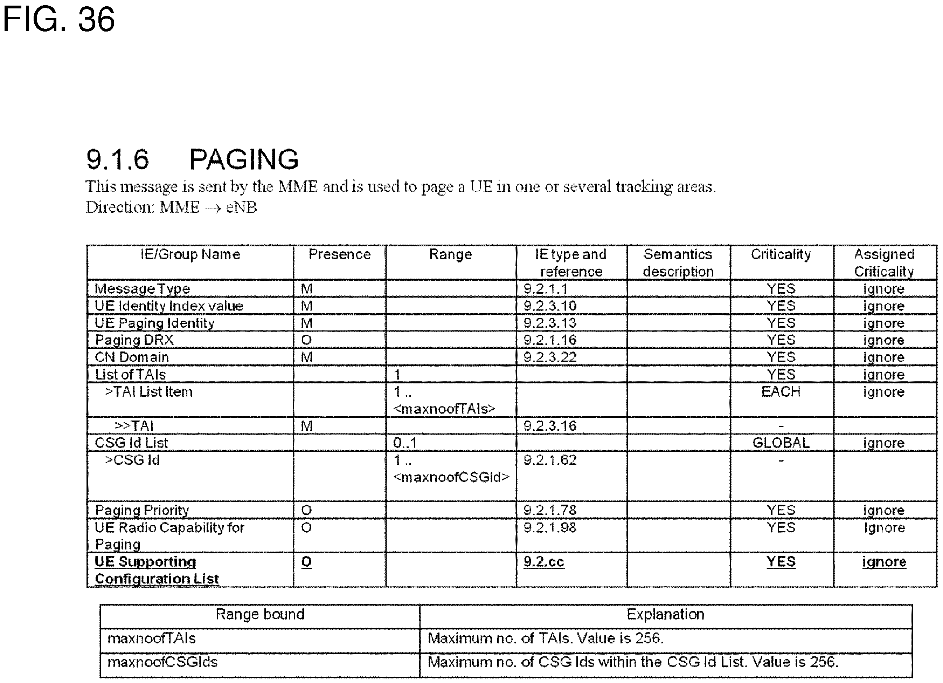

Next, the MME 100 transmits a paging message to the eNBs 200 and 210 (S636). Details of the S1AP: PAGING message are described in NPL 3. Fig. 36 illustrates an example of the S1AP: PAGING message transmitted in S636. As illustrated in Fig. 36, the S1AP: PAGING message includes an information element UE Supporting Configuration List for setting the Duplex mode, the frequency bandwidth, and the MIMO configuration supported by the corresponding UE.

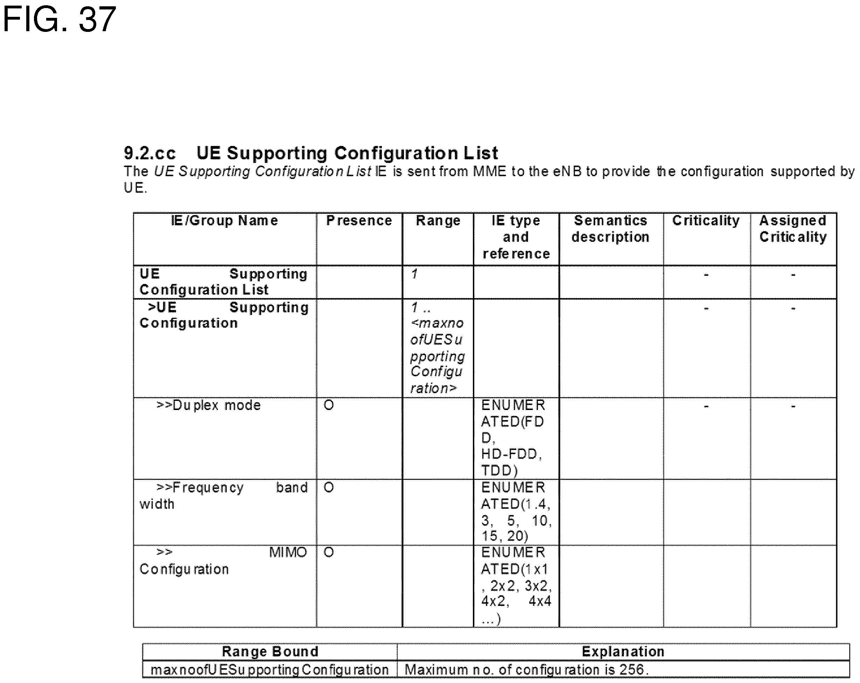

Fig. 37 illustrates details of the information element UE Supporting Configuration List. As illustrated in the example in Fig. 37, as with Fig. 35, the Duplex mode, the frequency bandwidth, and the MIMO antenna configuration supported by the UE 300 are set in the UE Supporting Configuration List.

Next, each of the eNBs 200 and 210 refers to the UE Supporting Configuration List of its received S1AP: PAGING message and transmits an RRC Paging message to the cells corresponding to the Duplex mode HD-FDD, the frequency bandwidth 1.4 MHz, and the MIMO antenna configuration 1 × 1. According to the present example embodiment, the eNB 200 transmits a paging message to cells 200-1, 200-2, and 200-3, and the eNB 210 transmits a paging message to cells 210-1, 210-2, and 210-3 (S637).

As described above, the present example embodiment can achieve an advantageous effect equivalent to that achieved according the first example embodiment while using, instead of the frequencies, the information elements indicating the communication methods, etc. of the base stations such as the Duplex modes, the frequency bandwidths, and the MIMO configurations. The above second and fourth example embodiments may be combined with each other. In this way, paging can be instructed per cell by using the Duplex modes, the frequency bandwidths, and the MIMO configurations.

### [Fifth example embodiment]

Next, a fifth example embodiment will be described in detail with reference to drawings. According to the fifth example embodiment, instead of the frequencies, the operation modes, which are variations of the base station communication function, are stored as the base station information, and a paging destination(s) is selected based on these values. Since an overall configuration is the same as that according to the first example embodiment, the following description will be made with a focus on the difference between the first and fifth example embodiments. According to the present example embodiment, base stations 200 and 210 has an operation mode in which the base stations 200 and 210 communicate with only MTC terminals, and an eNB 220 has an operation mode in which the eNB 220 communicates with normal terminals other than MTC terminals. While not illustrated, there may be a base station having an operation mode in which the base station communicates with MTC terminals and normal terminals. For example, a base station having an operation mode in which the base station communicates with only MTC terminals and a base station having an operation mode in which the base station communicates with MTC terminals and normal terminals may be reported by including an information element called category0Allowed defined in NPL 7 in SystemInformationBlockType1. In addition, as in the first and third example embodiments, the present example embodiment assumes that a UE 300 can connect to the base stations 200 and 210.

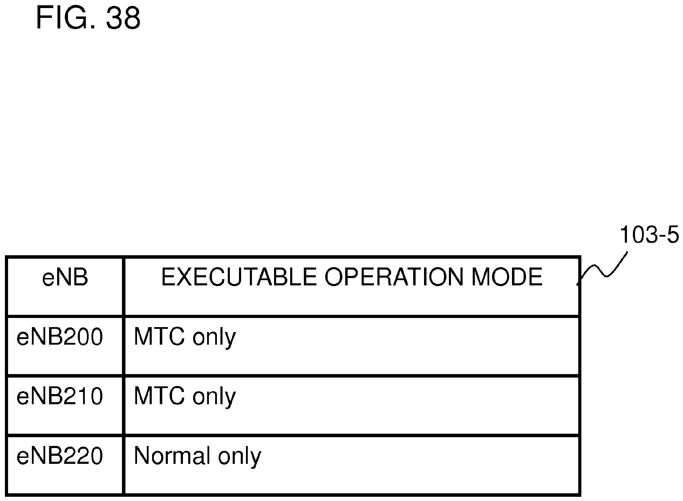

Fig. 38 is an example of base station information held by an MME 100 according to the fifth example embodiment of the present invention. As illustrated in Fig. 38, the MME 100 can hold information indicating whether an individual one of the eNBs 200 to 220 has an operation mode that enables communication with only MTC terminals. In the example in Fig. 38, while "MTC Only" and "Normal Only" are illustrated, these items of information may be replaced by codes (for example, MTC Only = 0 and Normal Only = 1). Alternatively, other kinds of representation may of course be used such as UE category 0 allowed and UE category 0 not allowed.

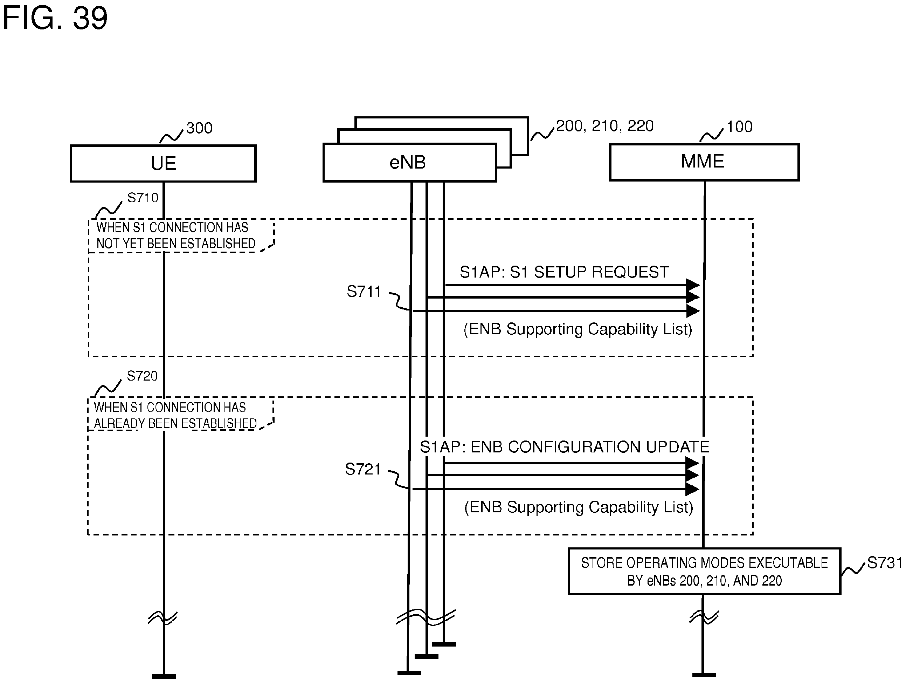

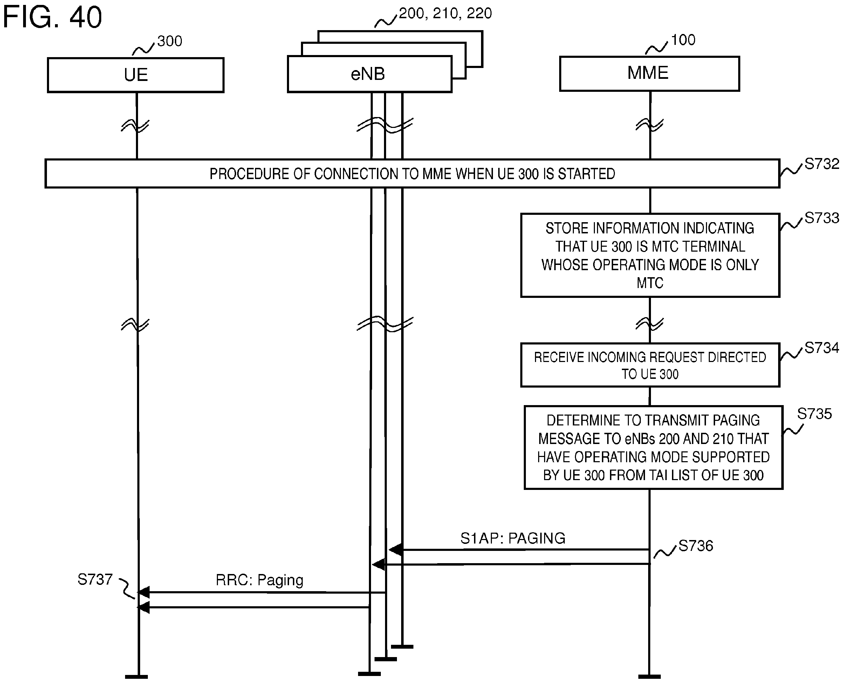

Next, an operation according to the present example embodiment will be described in detail with reference to drawings. Figs. 39 and 40 are sequence diagrams illustrating an operation according to the fifth example embodiment of the present invention. Hereinafter, an operation of the UE 300, the eNB 200, and the MME 100 will be described with reference to Figs. 39 and 40.

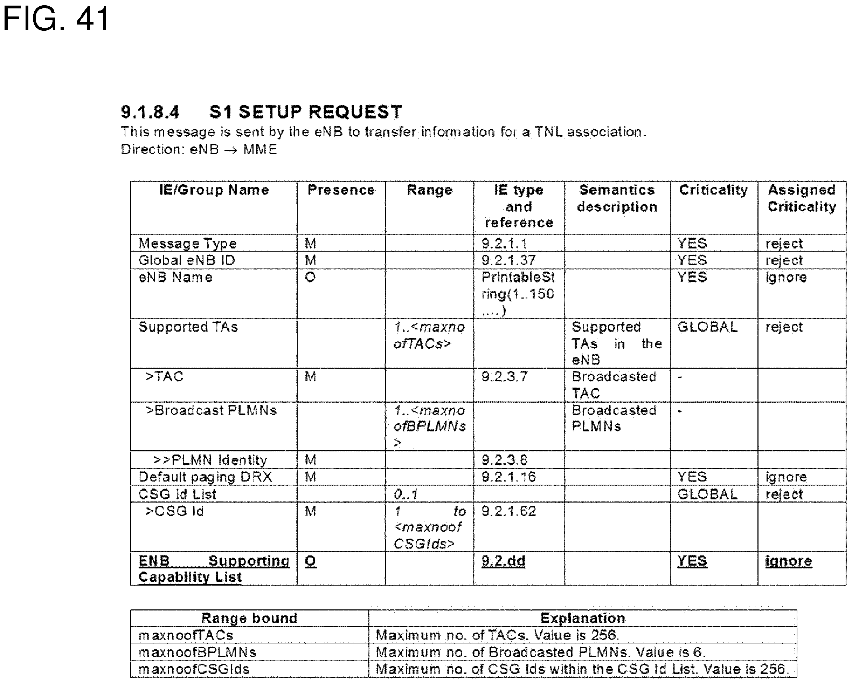

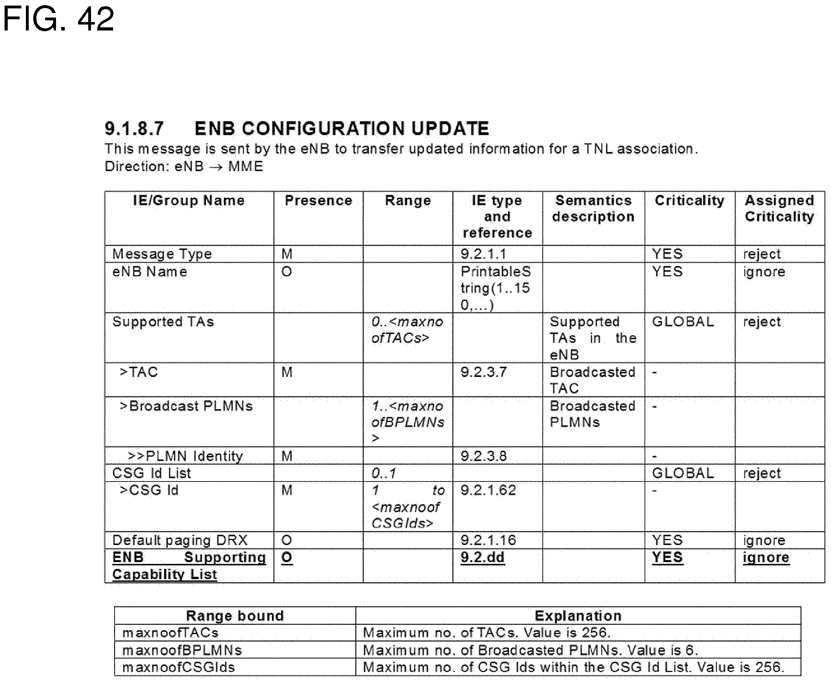

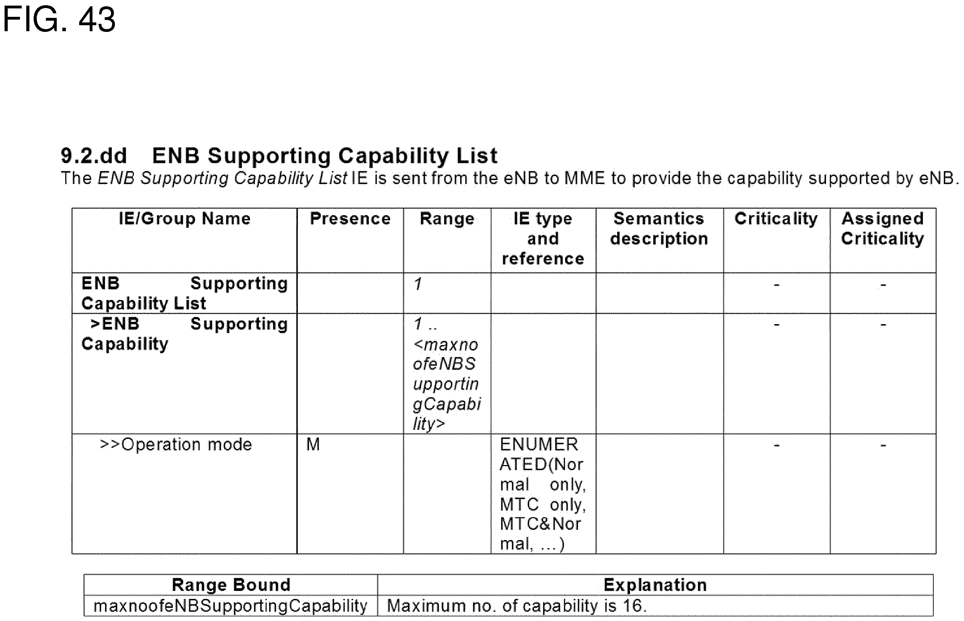

S710 and S720 in Fig. 39 basically match S110 and S120 in Fig. 6, respectively. However, as illustrated in Figs. 41 and 42, an information element called an ENB Supporting Capability List illustrated in Fig. 43 is included in an S1AP: S1 SETUP REQUEST message and an S1AP: ENB CONFIGURATION UPDATE message. The ENB Supporting Capability List includes an executable Operation Mode in a list format (see the upper table in Fig. 43).

Next, the MME 100 refers to the ENB Supporting Capability Lists of the received S1AP messages and stores information indicating that the eNBs 200 and 210 have an operation mode in which the eNBs 200 and 210 operate as base stations for only MTC terminals and that the eNB 220 has an operation mode in which the eNB 220 operates as a normal base station for not only MTC terminals but also normal terminals in a table 103-5 of a storage unit 103 (S731).

Next, the subsequent processing will be described with reference to Fig. 40. S732 to S734 in Fig. 40 are the same as S132 to S134 in Fig. 7, except that, in response to the result of the UE connection procedure in S732, the MME 100 stores information indicating that the UE 300 is an MTC terminal in S733. In S734, the MME 100 receives an incoming request, refers to UE location registration information, and determines eNBs having cells to which TAIs included in a TAI List of the UE 300 are allocated. Next, the MME 100 refers to the table 103-5 in Fig. 38 and determines whether any of the determined eNB has an operation mode supported by the UE 300. Herein, the MME 100 refers to the table 103-5 in Fig. 38 and determines to transmit a paging message to the eNBs 200 and 210 that operate only in the operation mode supported by the UE 300, among the eNBs 200 to 220 (S735). In this way, the MME 100 selects the eNBs 200 and 210 that operate only in the operation mode supported by the UE 300 among the eNBs 200 to 220. This is to exclude the eNB 220 from the paging targets and reduce the related load.

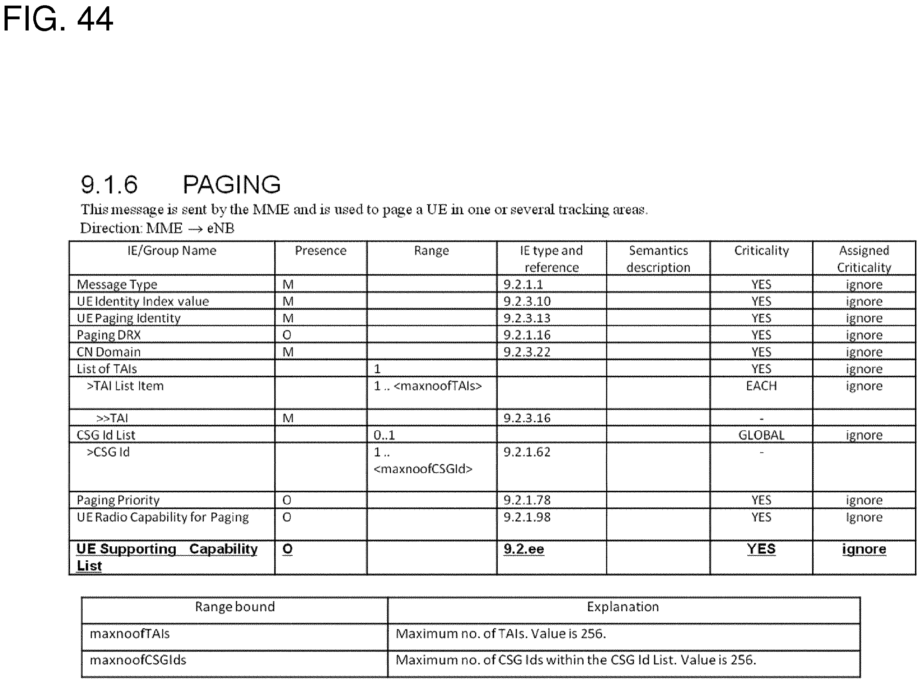

Next, the MME 100 transmits a paging message to the eNBs 200 and 210 (S736). Details of the S1AP: PAGING message are described in NPL 3. Fig. 44 illustrates an example of the S1AP: PAGING message transmitted in S736. As illustrated in Fig. 44, the S1AP: PAGING message includes an information element UE Supporting Capability List for setting an operation mode of the corresponding UE.

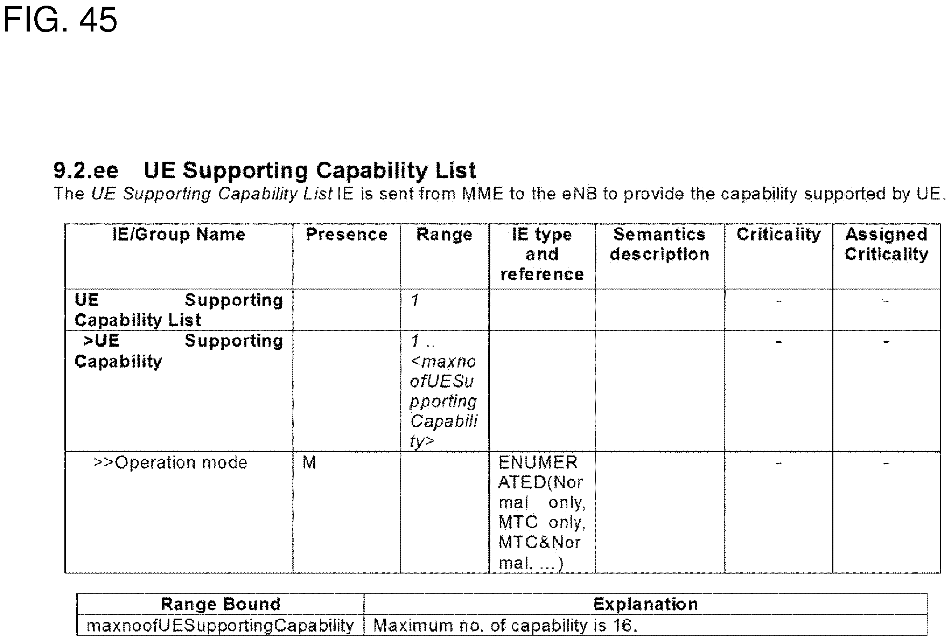

Fig. 45 illustrates details of the information element UE Supporting Capability List. As with Fig. 43, the UE Supporting Capability List in the example in Fig. 45 includes an operation mode supported by the UE 300.

As described above, the present example embodiment can achieve an advantageous effect equivalent to that achieved according to the first example embodiment while using, instead of the frequencies, the information elements indicating the operation modes, which are variations of the base station communication function. The above second and fifth example embodiments may be combined with each other. In this way, paging can be instructed per cell by using the operation modes.

### [Sixth example embodiment]

Next, a sixth example embodiment will be described in detail with reference to drawings. In the sixth example embodiment, frequency information per cell is collected from a Non Access Stratum (NAS) message from a UE, instead of eNBs. Since an overall configuration is the same as that according to the second example embodiment, the following description will be made with a focus on the difference between the second and sixth example embodiments. The present example embodiment also assumes that, among the cells created by an eNB 200, a cell 200-1 is operated at a frequency F0, and cells 200-2 and 200-3 are operated at a frequency F1. Likewise, among the cells created by an eNB 210, a cell 210-1 is operated at the frequency F0, and cells 210-2 and 210-3 are operated at the frequency F1. Likewise, among the cells created by an eNB 220, a cell 220-1 is operated at the frequency F0, and cells 220-2 and 220-3 are operated at the frequency F1.

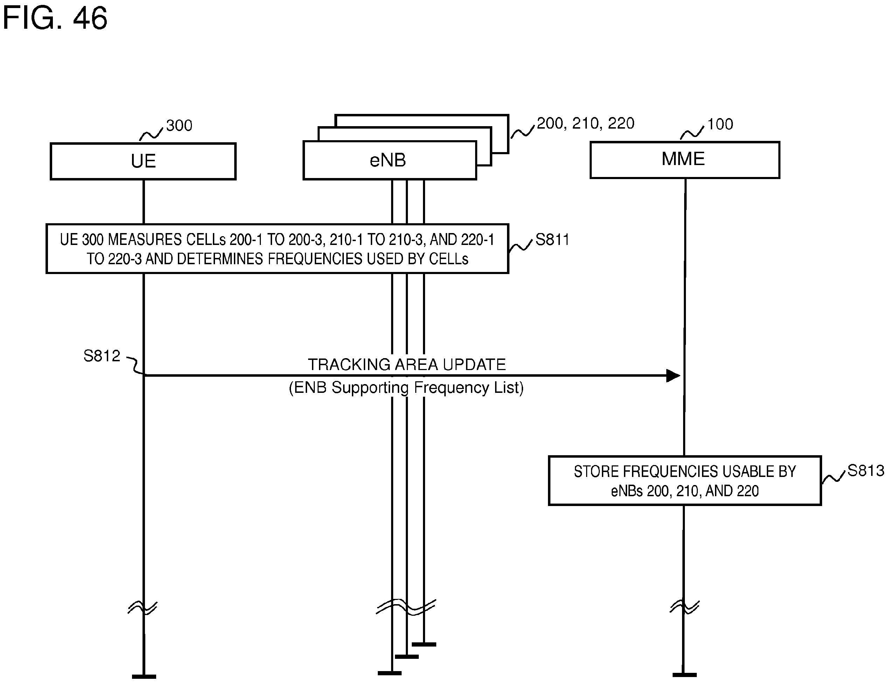

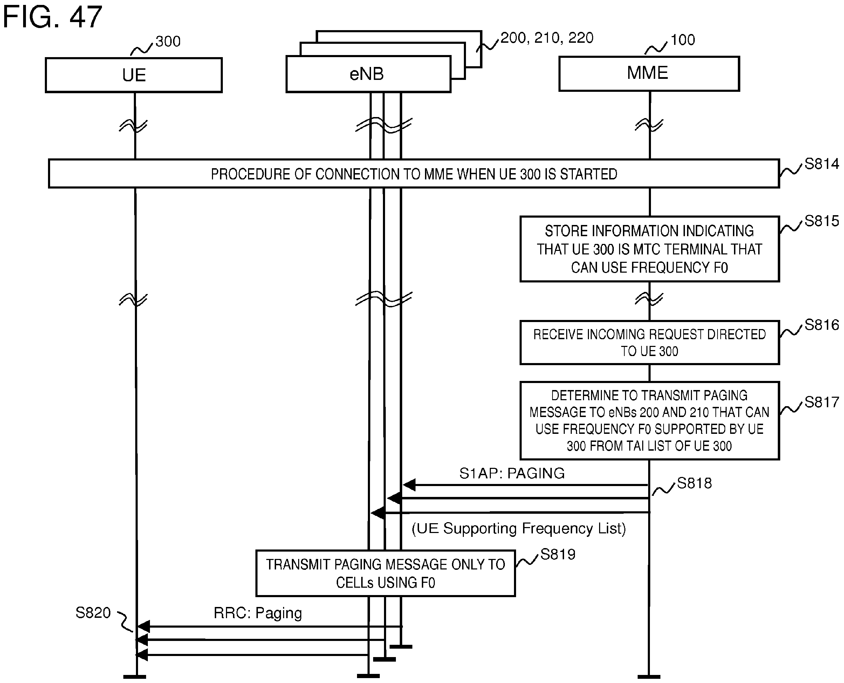

Next, an operation according to the present example embodiment will be described in detail with reference to drawings. Figs. 46 and 47 are sequence diagrams illustrating an operation according to the sixth example embodiment of the present invention. Hereinafter, an operation of a UE 300, the eNB 200, and an MME 100 will be described with reference to Figs. 46 and 47.

As illustrated in Fig. 46, first, the UE 300 receives signals from the cells 200-1 to 200-3 created by the eNB 200, the cells 210-1 to 210-3 created by the eNB 210, and the cells 220-1 to 220-3 created by the eNB 220, so as to determine the frequencies used by the respective cells (S811).

Next, the UE 300 sets an information element corresponding to the ENB Supporting Frequency List illustrated in Fig. 15 in a TRACKING AREA UPDATE REQUEST message, which is called a NAS message and one of the messages exchanged transparently between the UE 300 and the MME 100 via the eNB 200, and transmits the TRACKING AREA UPDATE REQUEST message (S812).

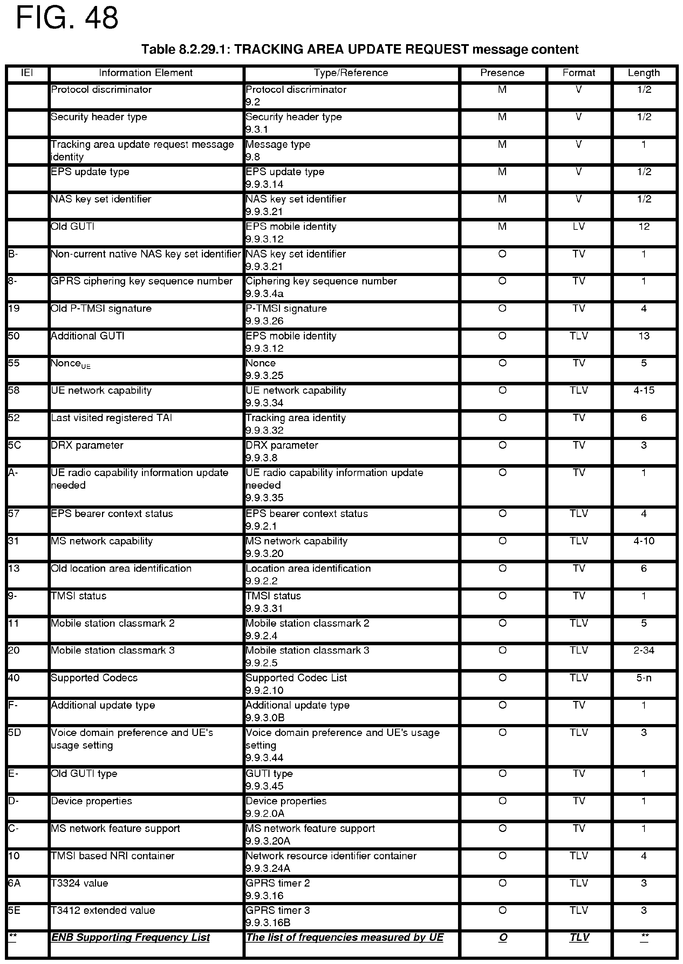

Fig. 48 illustrates an example of the TRACKING AREA UPDATE REQUEST message that can be used according to the present example embodiment. In the example in Fig. 48, the information element ENB Supporting Frequency List underlined in the lowest row in Fig. 48 has been added. According to the present example embodiment, while the UE 300 uses the TRACKING AREA UPDATE REQUEST message to transmit the information element ENB Supporting Frequency List, the same information element may be added to another NAS message. The ENB Supporting Frequency List in Fig. 48 includes the frequencies that have been measured by the UE 300 and used by the cells 200-1 to 200-3 created by the eNB 200, the cells 210-1 to 210-3 created by the eNB 210, and the cells 220-1 to 220-3 created by the eNB 220 in a list format.

The MME 100 refers to the ENB Supporting Frequency Lists in the above received NAS messages and stores information indicating that, among the cells created by the eNB 200, the cell 200-1 uses the frequency F0 and the cells 200-2 and 200-3 use the frequency F1 in a table 103-2 of a storage unit 103. Likewise, the MME 100 stores information indicating that, among the cells created by the eNB 210, the cell 210-1 uses the frequency F0 and the cells 210-2 and 210-3 use the frequency F1 in the table 103-2 of the storage unit 103. Likewise, the MME 100 stores information indicating that, among the cells created by the eNB 220, the cell 220-1 uses the frequency F0 and the cells 220-2 and 220-3 use the frequency F1 in the table 103-2 of the storage unit 103 (S813).

Next, the subsequent processing will be described with reference to Fig. 47. S814 to S820 in Fig. 47 are the same as S432 to S438 in Fig. 14. In S816, the MME 100 receives an incoming request, refers to UE location registration information, and determines eNBs having cells to which TAIs included in a TAI List in the UE 300 are allocated. In addition, the MME 100 refers to the table 103-2 in Fig. 12 and determines whether any of the determined eNBs has cells that can use the frequency F0 supported by the UE 300. Herein, the MME 100 determines that the cells 200-1, 210-1, and 220-1 of the eNBs 200 to 220 are the matching cells and determines to transmit a paging message specifying the paging cells to the eNBs 200, 210, and 220 (S817).

Next, the MME 100 transmits a paging message to the eNB 200, 210, and 220 (S818). Details of the S1AP: PAGING message are described in NPL 3. The MME 100 transmits the same paging message as that illustrated in Fig. 16.

Next, the eNBs 200 to 220 refer to the UE Supporting Frequency Lists in the received S1AP: PAGING messages and determine that the cells 200-1, 210-1, and 220-1 are the cells to which the paging message needs to be transmitted (S819). In addition, the eNBs 200, 210, and 220 transmit an RRC: Paging message to the cells 200-1, 210-1, and 220-1, respectively (S820).

As described above, in the present example embodiment, no S1AP message is used to collect base station information. However, the present example embodiment can achieve an equivalent advantageous effect to that achieved according to the second example embodiment.

### [Seventh example embodiment]

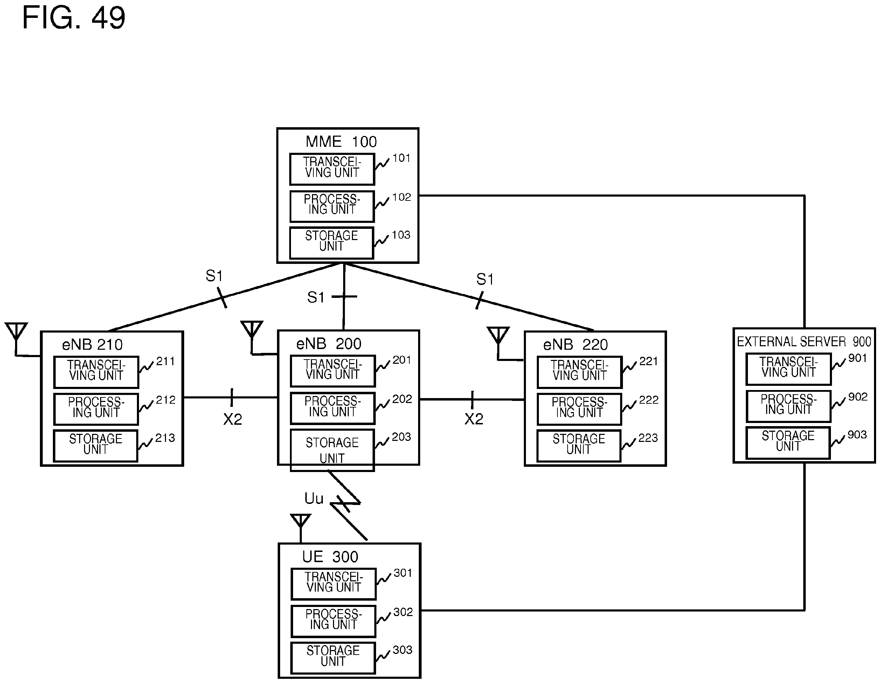

Next, a seventh example embodiment will be described in detail with reference to drawings. In the seventh example embodiment, UE information including frequencies of eNBs is collected by using an external server. Fig. 49 illustrates a configuration of a mobile communication system according to the seventh example embodiment of the present invention. What is different from the first example embodiment illustrated in Fig. 2 is that an external server 900 that can be accessed by both an MME 100 and a UE 300 is arranged and that the UE 300 can transmit information including frequencies of base stations to the MME.

The external server 900 includes a transceiving unit 901, a processing unit 902, and a storage unit 903. For example, the external server 900 receives measurement results of frequencies of base stations from the UE 300 and manages the measurement results. In addition, when receiving a request from the MME 100, the external server 900 answers base stations that need to perform the paging, based on the measurement results of the frequencies of the base stations, for example.

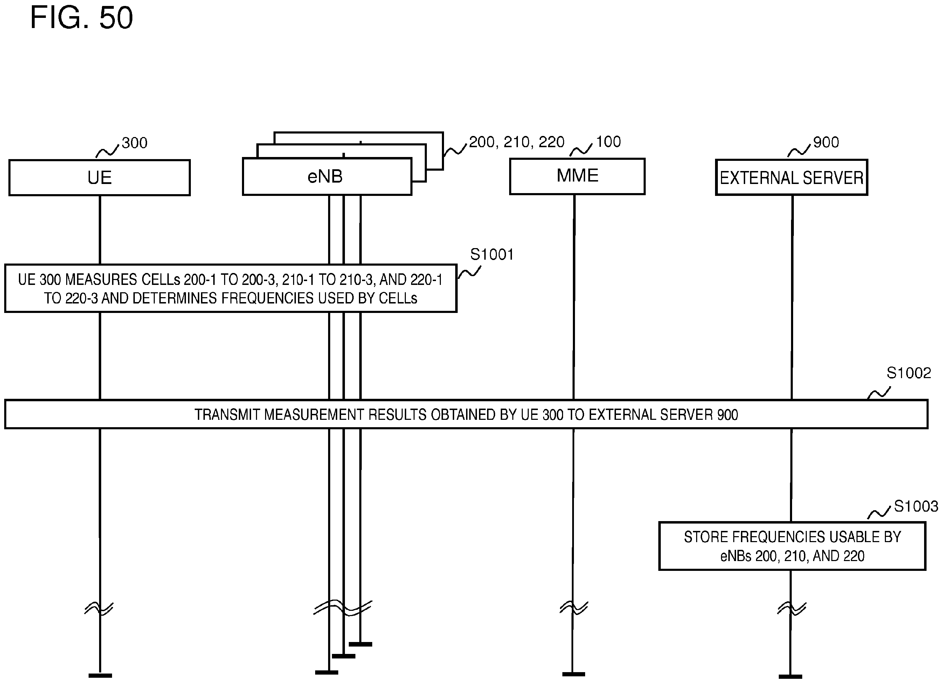

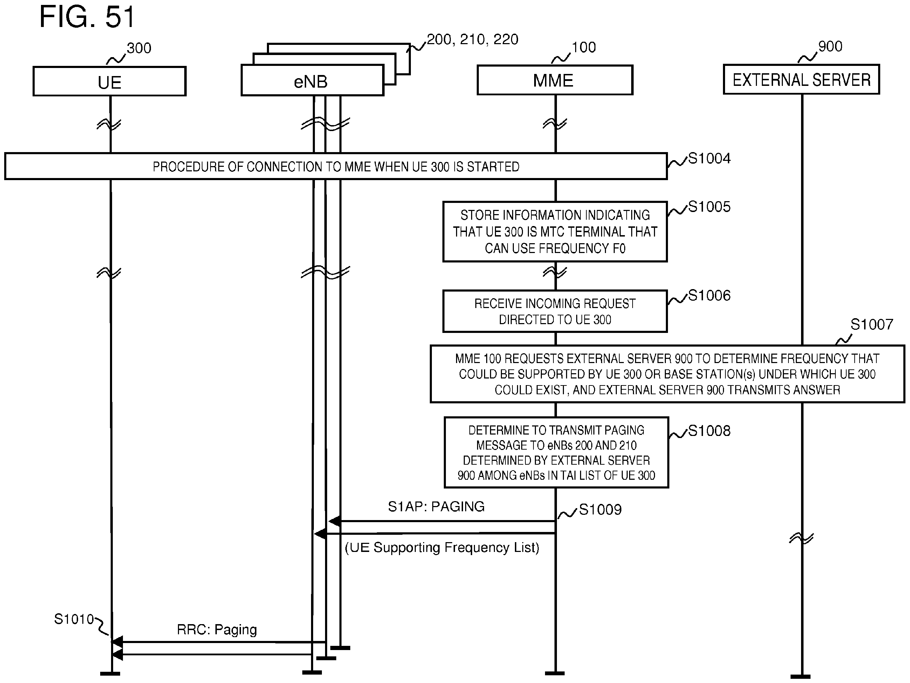

Next, an operation according to the present example embodiment will be described in detail with reference to drawings. Figs. 50 and 51 are sequence diagrams illustrating an operation according to the seventh example embodiment of the present invention. Hereinafter, an operation of the UE 300, an eNB 200, the MME 100, and the external server 900 will be described with reference to Figs. 50 and 51.

As illustrated in Fig. 50, first, the UE 300 receives, as a part of the measurement of radio information, signals from cells 200-1 to 200-3 created by the eNB 200, cells 210-1 to 210-3 created by an eNB 210, and cells 220-1 to 220-3 created by an eNB 220 and determines the frequencies of the respective cells (S1001). Next, the UE 300 transmits the measurement results of the radio information to the external server 900 (S1002). More specifically, this case corresponds to a case in which the UE 300 behaves as a Minimization of Drive Test (MDT) terminal in NPL 6. In this case, the UE 300 transmits the measurement results to the external server 900 via the eNB 200 or the MME 100. The transmission of the measurement results from the UE 300 to the external server 900 is not limited to the above mode. The transmission may be performed in any other mode. The information transmitted from the UE 300 to the external server 900 may include, for example, location information such as the latitude, longitude, and altitude of the UE 300 and the travel speed and the operation history of the UE 300, in addition to the frequencies used by the eNBs. The location information and the travel speed can be used as information for determining the cell in which the UE 300 exists. In addition, the travel speed and the operation history can be used as information for estimating whether the UE 300 is an MTC terminal.

Next, the external server 900 stores the received measurement results in the storage unit 903 (S1003). For example, the external server 900 stores information indicating that the eNBs 200 and 210 can use a frequency F0 and the eNB 220 can use a frequency F1 in a table equivalent to the table 103-1 in Fig. 4. In addition, if the external server 900 has already received other information such as the location information, the travel speed, and the operation history, the external server 900 stores these items of information in a table per UE.

Next, the subsequent processing will be described with reference to Fig. 51. S1004 to S1006 in Fig. 51 are the same as S132 to S134 in Fig. 7. In S1006, the MME 100 receives an incoming request, specifies the UE indicated by the incoming request, and requests the external server 900 to estimate base stations that can use the frequency supported by the UE 300. The external server 900 performs the estimation from the correlation between (among) items of information stored in the storage unit 903 and transmits a result of the estimation to the MME 100 (S1007). For example, based on the frequency supported by the UE 300, the external server 900 determines eNBs that can use the frequency and notifies the MME 100 of the determined eNBs. In this operation, if paging target base stations can be narrowed down further, the external server 900 may obtain an estimation result by using other information and notify the MME 100 of the estimation result. For example, the external server 900 may use location information such as the latitude, longitude, and altitude of the UE 300 and the travel speed and the operation history collected from the UE 300, so as to select certain eNBs from the eNBs that can use the certain frequency F0 and transmit the selected eNBs to the MME 100.

When receiving a response from the external server 900, the MME 100 refers to UE location registration information and determines eNBs having cells to which TAIs included in a TAI List of the UE 300 are allocated. In addition, based on the information received from the external server 900, the MME 100 determines whether any of the determined eNBs is an eNB estimated by the external server 900. Herein, the MME 100 determines that the eNBs 200 and 210 are the matching eNBs and determines to transmit a paging message to the eNBs 200 and 210 (S1008).

Next, the MME 100 transmits a paging message to the eNBs 200 and 210 (S1009). Next, the eNBs 200 and 210 transmit an RRC Paging message to the cells operated at the currently used frequency among the frequencies that can be used. In the present example embodiment, the eNB 200 transmits a paging message to the cells 200-1, 200-2, and 200-3, and the eNB 210 transmits a paging message to the cells 210-1, 210-2, and 210-3 (S1010).

As described above, the present invention is applicable to the mode in which the external server 900 is used. In particular, the present example embodiment provides an advantageous effect that base stations or cells that need to perform paging can further be narrowed down by using information in the external server 900 (for example, UE location information). In the example in Fig. 51, while the external server 900 narrows down the base stations, a part of this operation may be performed by the MME 100. For example, since the MME 100 has a function of managing the location of the UE, the external server 900 may transmit base station candidates based on the frequencies, and the MME 100 may narrow down the paging destination base stations, based on the UE location or travel history. In addition, as described in the third to sixth example embodiments, in the seventh example embodiment, the external server 900 may collect the communication functions or the operation modes of the base stations and notify the MME 100 of these items of information or base stations based on these items of information, for example.

While example embodiments of the present invention have thus been described, the present invention is not limited thereto. Further variations, substitutions, or adjustments can be made without departing from the basic technical concept of the present invention. For example, the configurations of the systems, the configurations of the elements, and the representation modes of the messages illustrated in the drawings have been used only as examples to facilitate understanding of the present invention. Namely, the present invention is not limited to the configurations illustrated in the drawings.

An individual unit (processing means) of the individual core network node (MME), base station (eNB), and terminal (UE) illustrated in Fig. 1, 2, 49, or the like may be realized by a computer program which causes a computer that constitute the corresponding apparatus to use its hardware (processor, memory, storage, etc.) and perform the corresponding processing.

In addition, while the above first example embodiment has been described assuming that the MME 100 acquires frequencies usable by eNBs from the eNBs, these items of information may be set previously as station data in the MME 100.

In addition, in the above second example embodiment, the MME 100 notifies an individual eNB of a frequency that constitutes the cells to which a paging message needs to be transmitted. However, the frequency may be set as station data in the eNB. For example, the eNB 200 may hold the frequency F0 as the frequency supported by an MTC terminal and determine that a paging message is directed to the MTC terminal based on information such S-TMSI in UE Paging Identity, Paging DRX, or UE Radio Capability for Paging included in an S1AP: paging message received from the MME 100. Next, the eNB 200 may transmit a paging message only to a cell(s) at the frequency supported by the MTC terminal.

In addition, while the present example embodiment has mainly been described assuming that the present invention is applied to LTE, the present invention is applicable to radio communication systems other than LTE. For example, the present invention is applicable to other radio communication systems such as WCDMA (Wideband Code Division Multiple Access) (registered trademark), GSM (global system for mobile communications) (registered trademark), CDMA2000, and WiMAX (Worldwide Interoperability for Microwave Access).

In addition, while an individual one of the above example embodiments has been described by using a configuration including an MME, eNBs, and a UE, the present invention is applicable to other networks having different configurations. For example, the present invention is applicable to a network including small cell gateways, a network including relay nodes and donor eNBs, and a network in which connection means called dual connectivity is realized.

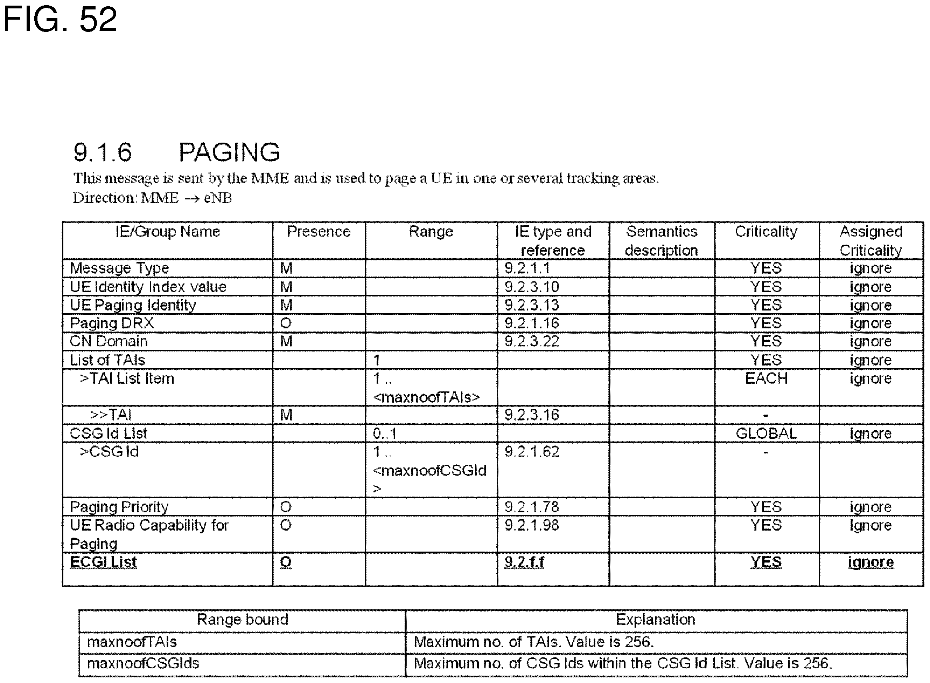

In addition, in the above second example embodiment, the MME collectively sets ECGIs, which are identifiers of cells that an eNB needs to page, and a frequency in a list format in a UE Supporting Frequency List in a paging message. However, the MME may set only the ECGIs of the paging targets in a list format, as illustrated in Fig. 52.

In addition, the above fourth example embodiment has been described by using an example in which a single eNB performs an LTE service, the present invention is applicable to a case in which a single eNB simultaneously provides service areas constituted by a plurality of radio communication techniques such as 3G and WLAN. In this case, the MME 100 is notified of information about the radio communication systems simultaneously provided by the eNB, and the MME 100 can use the information when determining paging message transmission destination(s).

Analysis on the existing proposals (NPLs 1 and 2) described in Background and advantageous effects of the present invention will hereinafter be described. NPL 1 proposes optimization of paging for low-mobility terminals. More specifically, NPL 1 proposes narrowing down the eNBs to which a paging message needs to be transmitted by determining that an MTC terminal rarely moves from its travel history. However, an MTC terminal could be a part of a moving machine such as an automobile. An individual terminal that operates in an LTE radio communication system including MTC terminals has two states, i.e., a connected mode and an idle mode. When a terminal is in the idle mode, the core network can determine the location of the terminal only per TAI List. Thus, even if the eNBs to which a paging message needs to be transmit have been narrowed down from the travel history of the terminal in the connected mode and even if a paging message is transmitted to the eNBs, the transmission fails. It is eventually necessary to transmit a paging message to all the eNBs having cells to which TAIs included in a TAI List are allocated. According to the present invention, irrespective of the state of the above terminal, the number of paging messages flowing through networks and the load of the MME and the eNBs on processing the paging messages can be reduced.

NPL 2 proposes a load reduction technique relating to paging. More specifically, NPL 2 proposes a technique for reducing MME communication load and S1 interface communication load and a technique for reducing eNB processing load and radio section (Uu interface) communication load between an individual eNB and MTC terminal. With the former technique, a paging message is transmitted to an eNB used by an MTC terminal most recently, and the eNB forwards the paging message to an appropriate eNB via an interface connecting the eNBs called an X2 interface. The eNB that has received the paging message transmits the paging message to the MTC terminal (the eNB processing load and the Uu interface connection load are reduced consequently, since the number of eNBs that transmit the paging message to the MTC terminal is reduced). With the latter technique, when an eNB receives a parameter called an UE Radio Capability from an MTC terminal, the eNB extracts information about the frequency that can be used by the UE from the parameter, generates a new information element, and transmits the new information element to the MME. The MME sets this information element in a paging message and transmits the paging message to all the eNBs having cells to which TAIs included in a TAI List are allocated, and the eNBs transmit a paging message to cells operated at the corresponding frequency. As with NPL 1, it is clear that there are cases in which the former technique does not operate well. While the latter technique can reduce the eNB processing load and the Uu interface communication load, since a paging message is transmitted to all the eNBs having cells to which TAIs included in a TAI List are allocated, the MME processing load and the S1 interface communication load are not reduced. Considering that a macro base station has a service area with a several-kilometer radius, many MTC terminals can exist in the service area. Thus, since paging processing for an MTC terminal can increase the MME processing load and the S1 interface communication load, there is a high possibility that incoming signals of Voice over LTE (VoLTE) transmitted to normal terminals could be affected, for example. The present invention can more effectively reduce the number of paging messages flowing through networks and the load of the MME and eNB on processing the paging messages than the techniques in the above NPL 2.

Variations and adjustments of the example embodiments and examples are possible within the scope of the overall disclosure (including the claims) of the present invention and based on the basic technical concept of the present invention. The description discloses numerical value ranges. However, even if the description does not particularly disclose arbitrary numerical values or small ranges included in the ranges, these values and ranges should be deemed to have been specifically disclosed.

### [REFERENCE SIGNS LIST]

100 MME
100A core network node
101, 201, 211, 221, 301, 901 transceiving unit
101A paging candidate storage unit
102, 202, 212, 222, 302, 902 processing unit
102A base station information storage unit
103, 203, 213, 223, 303, 903 storage unit
103-1, 103-2, 103-3, 103-4, 103-5, 103-UE table
103A paging destination selection unit
104A paging instruction unit
200 to 220, 200A eNB (base station)
200-1 to 200-3, 210-1 to 210-3, 220-1 to 220-3 cell
300 UE
900 external server

## Claims

1. A communication system comprising an MME (100), eNBs (200, 210, 220) and UE (300), wherein:
the eNBs (200, 210, 220) are configured to transmit an S1 setup request message including information about own one or more communication functions to the MME (100) under a state where S1 connection has not been established between each of the eNBs (200, 210, 220) and the MME (100);
the MME (100)
comprises a storage unit (103) storing a first table (103-1) for the one or more communication functions of the eNBs (200, 210, 220) associated with eNB IDs; and the MME (100) is configured to:
when it receives the S1 setup request message from the eNBs (200, 210, 220), store the communication function(s) in the first table (103-1); and
when it receives an incoming request to the UE (300) transmitted by an MTC-Inter Working Function, refer to UE location registration information and determine candidate eNBs having cells where the UE (300) is allocated, then select an eNB capable of using a communication function supported by the UE (300) among the candidate eNBs with reference to the first table (103-1), and then transmit a paging message to the selected eNB; and
the eNB, having received the paging message transmitted by the MME (100), being configured to transmit a paging message to own cells.

2. The communication system according to claim 1, wherein the one or more communication functions indicate one or more frequencies that can be used by the respective eNBs (200, 210, 220).

3. The communication system according to claim 2; wherein
the eNBs (200, 210, 220) are configured to transmit an S1 setup request message including information about IDs of own cells and frequencies used in the cells;
the MME (100) is configured to:
when it receives the S1 setup request message from the eNBs (200, 210, 220), store the frequencies associated with the eNB IDs and the cell IDs in the first table (103-1), and
when it receives the incoming request, select an eNB having a cell where a frequency supported by the UE (300) is used among the candidate eNBs with reference to the first table (103-1), and then transmit a paging message to the selected eNB while specifying one or more cells to be paged;
the eNB, having received the paging message transmitted by the MME (100), is configured to transmit a paging message to the specified one or more cells.

4. The communication system according to claim 2; wherein the one or more frequencies are indicated with IDs of E-UTRA Operating Bands.

5. The communication system according to claim 1; wherein the one or more communication functions indicate a duplex mode, a frequency bandwidth, and a MIMO configuration that can be used by the respective eNBs (200, 210, 220).

6. The communication system according to claim 1; wherein the one or more communication functions indicate whether the eNBs (200, 210, 220) may communicate with MTC terminals or not.

7. The communication system according to claim 1; wherein
the UE (300) is configured to transmit an UE-message including information about own one or more communication functions to the MME (100) when started,
the storage unit (103) of the MME (100) is configured to store a second table (103-UE) for the one or more communication functions of the UE (300) associated with UE IDs;
the MME (100) is configured to, when it receives the UE-message from the UE (300), store one or more communication functions of the UE (300) in the second table (103-UE), and when it receives the incoming request to the UE (300) transmitted by an MTC-Inter Working Function, determine the one or more communication functions of the UE (300) with reference to the second table (103-UE) for the selection of an eNB among the candidate eNBs.

8. An MME (100) for a communication system according to any one of claims 1 to 7.

9. An eNB (200, 210, 220) for a communication system according to any one of claims 1 to 7.

## Patentansprüche

1. Kommunikationssystem mit einem MME (100), eNBs (200, 210, 220) und einem UE (300), wobei:
die eNBs (200, 210, 220) dafür konfiguriert sind, eine S1-Verbindungseinrichtungsanforderungsnachricht, die Information über eine oder mehrere eigene Kommunikationsfunktionen enthält, an die MME (100) in einem Zustand zu übertragen, in dem keine S 1-Verbindung zwischen jeder der eNBs (200, 210, 220) und der MME (100) eingerichtet worden ist;
wobei die MME (100)
eine Speichereinheit (103) aufweist, die eine erste Tabelle (103-1) für die eine oder die mehreren Kommunikationsfunktionen der eNBs (200, 210, 220) speichert, denen eNB-IDs zugeordnet sind; und
wobei die MME (100) dafür konfiguriert ist:
wenn sie die S1-Verbindungseinrichtungsanforderungsnachricht von den eNBs (200, 210, 220) empfängt, die Kommunikationsfunktion(en) in der ersten Tabelle (103-1) zu speichern; und
wenn sie eine ankommende Anforderung an das UE (300) empfängt, die durch eine MTC-Inter-Working-Funktion übertragen wird, auf UE-Standortregistrierungsinformation Bezug zu nehmen und eNB-Kandidaten zu bestimmen, die Zellen aufweisen, denen das UE (300) zugewiesen ist, dann einen eNB auszuwählen, der in der Lage ist, eine Kommunikationsfunktion, die durch das UE (300) unterstützt wird, unter den eNB-Kandidaten unter Bezugnahme auf die erste Tabelle (103- 1) zu verwenden, und dann eine Paging-Nachricht an den ausgewählten eNB zu übertragen, und
der eNB, der die durch die MME (100) übertragene Paging-Nachricht empfangen hat, dafür konfiguriert ist, eine Paging-Nachricht an eigene Zellen zu übertragen.

2. Kommunikationssystem nach Anspruch 1, wobei die eine oder die mehreren Kommunikationsfunktionen eine oder mehrere Frequenzen anzeigen, die durch die jeweiligen eNBs (200, 210, 220) genutzt werden können.

3. Kommunikationssystem nach Anspruch 2, wobei
die eNBs (200, 210, 220) dafür konfiguriert sind, eine S1-Verbindungseinrichtungsanforderungsnachricht zu übertragen, die Information über IDs eigener Zellen und in den Zellen verwendete Frequenzen enthält,
die MME (100) dafür konfiguriert ist:
wenn sie die S1-Verbindungseinrichtungsanforderungsnachricht von den eNBs (200, 210, 220) empfängt, die den eNB-IDs und den Zellen-IDs zugeordneten Frequenzen in der ersten Tabelle (103-1) zu speichern, und
wenn sie die eingehende Anforderung empfängt, einen eNB mit einer Zelle, in der eine durch das UE (300) unterstützte Frequenz verwendet wird, unter den eNB-Kandidaten unter Bezugnahme auf die erste Tabelle (103-1) auszuwählen und dann eine Paging-Nachricht an den ausgewählten eNB zu übertragen, während eine oder mehrere zu pagende Zellen spezifiziert werden,
wobei der eNB, der die durch die MME (100) übertragene Paging-Nachricht empfangen hat, dafür konfiguriert ist, eine Paging-Nachricht an die spezifizierte(n) eine oder mehreren Zelle(n) zu übertragen.

4. Kommunikationssystem nach Anspruch 2, wobei die eine oder die mehreren Frequenzen mit IDs von E-UTRA-Betriebsbändern angezeigt werden.

5. Kommunikationssystem nach Anspruch 1, wobei die eine oder die mehreren Kommunikationsfunktionen einen Duplexmodus, eine Frequenzbandbreite und eine MIMO-Konfiguration anzeigen, der/die durch die jeweiligen eNBs (200, 210, 220) verwendet werden kann/können.

6. Kommunikationssystem nach Anspruch 1, wobei die eine oder die mehreren Kommunikationsfunktionen anzeigen, ob die eNBs (200, 210, 220) mit MTC-Endgeräten kommunizieren können oder nicht.

7. Kommunikationssystem nach Anspruch 1, wobei
das UE (300) dafür konfiguriert ist, eine UE-Nachricht mit Information über eine oder mehrere eigene Kommunikationsfunktionen an die MME (100) zu übertragen, wenn sie gestartet wird, und
die Speichereinheit (103) der MME (100) dafür konfiguriert ist, eine zweite Tabelle (103-UE) für die eine oder die mehreren Kommunikationsfunktionen des UE (300) zu speichern, denen UE-IDs zugewiesen sind,
die MME (100) dafür konfiguriert ist, wenn sie die UE-Nachricht vom UE (300) empfängt, eine oder mehrere Kommunikationsfunktionen des UE (300) in der zweiten Tabelle (103-UE) zu speichern, und, wenn sie die durch eine MTC-Inter-Working-Funktion übertragene eingehende Anfrage an das UE (300) empfängt, die eine oder die mehreren Kommunikationsfunktionen des UE (300) unter Bezugnahme auf die zweite Tabelle (103-UE) für die Auswahl eines eNB unter den eNB-Kandidaten zu bestimmen.

8. MME (100) für ein Kommunikationssystem nach einem der Ansprüche 1 bis 7.

9. eNB (200, 210, 220) für ein Kommunikationssystem nach einem der Ansprüche 1 bis 7.

## Revendications

1. Système de communication comprenant une MME (100), des eNB (200, 210, 220) et un UE (300), dans lequel :
les eNB (200, 210, 220) sont configurés pour transmettre un message de demande d'instauration S1 comportant des informations concernant une ou plusieurs de leurs propres fonctions de communication à la MME (100) dans un état où une connexion S1 n'a pas été établie entre chacun des eNB (200, 210, 220) et la MME (100) ;
la MME (100)
comprend une unité de stockage (103) stockant une première table (103-1) pour les une ou plusieurs fonctions de communication des eNB (200, 210, 220) associées à des identifiants d'eNB ; et la MME (100) est configurée pour :
lorsqu'elle reçoit le message de demande d'instauration S1 en provenance des eNB (200, 210, 220), stocker la ou les fonctions de communication dans la première table (103-1) ; et
lorsqu'elle reçoit une demande entrante pour l'UE (300) transmise par une fonction d'interfonctionnement MTC, consulter des informations d'enregistrement de localisation d'UE et déterminer des eNB candidats ayant des cellules où l'UE (300) est alloué, ensuite sélectionner un eNB capable d'utiliser une fonction de communication prise en charge par l'UE (300) parmi les eNB candidats en référence à la première table (103-1), puis transmettre un message de téléavertissement à l'eNB sélectionné ; et
l'eNB, ayant reçu le message de téléavertissement transmis par la MME (100), étant configuré pour transmettre un message de téléavertissement à ses propres cellules.

2. Système de communication selon la revendication 1, dans lequel les une ou plusieurs fonctions de communication indiquent une ou plusieurs fréquences qui peuvent être utilisées par les eNB (200, 210, 220) respectifs.

3. Système de communication selon la revendication 2 ; dans lequel
les eNB (200, 210, 220) sont configurés pour transmettre un message de demande d'instauration S1 comportant des informations concernant des identifiants de leurs propres cellules et de fréquences utilisées dans les cellules ;
la MME (100) est configurée pour :
lorsqu'elle reçoit le message de demande d'instauration S1 en provenance des eNB (200, 210, 220), stocker les fréquences associées aux identifiants d'eNB et aux identifiants de cellule dans la première table (103-1), et
lorsqu'elle reçoit la demande entrante, sélectionner un eNB ayant une cellule où une fréquence prise en charge par l'UE (300) est utilisée parmi les eNB candidats en référence à la première table (103-1), puis transmettre un message de téléavertissement à l'eNB sélectionné tout en spécifiant une ou plusieurs cellules à téléavertir ;
l'eNB, ayant reçu le message de téléavertissement transmis par la MME (100), est configuré pour transmettre un message de téléavertissement aux une ou plusieurs cellules spécifiées.

4. Système de communication selon la revendication 2, dans lequel les une ou plusieurs fréquences sont indiquées avec des identifiants de bandes de fonctionnement E-UTRA.

5. Système de communication selon la revendication 1, dans lequel les une ou plusieurs fonctions de communication indiquent un mode duplex, une largeur de bande de fréquences, et une configuration MIMO qui peuvent être utilisés par les eNB (200, 210, 220) respectifs.

6. Système de communication selon la revendication 1, dans lequel les une ou plusieurs fonctions de communication indiquent si les eNB (200, 210, 220) peuvent communiquer avec des terminaux MTC ou non.

7. Système de communication selon la revendication 1, dans lequel
l'UE (300) est configuré pour transmettre un message d'UE comportant des informations concernant une ou plusieurs de ses propres fonctions de communication à la MME (100) lorsqu'il a démarré,
l'unité de stockage (103) de la MME (100) est configurée pour stocker une deuxième table (103-UE) pour les une ou plusieurs fonctions de communication de l'UE (300) associées à des identifiants d'UE ;
la MME (100) est configurée pour, lorsqu'elle reçoit le message d'UE en provenance de l'UE (300), stocker une ou plusieurs fonctions de communication de l'UE (300) dans la deuxième table (103-UE), et lorsqu'elle reçoit la demande entrante pour l'UE (300) transmise par une fonction d'interfonctionnement MTC, déterminer les une ou plusieurs fonctions de communication de l'UE (300) en référence à la deuxième table (103-UE) pour la sélection d'un eNB parmi les eNB candidats.

8. MME (100) pour un système de communication selon l'une quelconque des revendications 1 à 7.

9. eNB (200, 210, 220) pour un système de communication selon l'une quelconque des revendications 1 à 7.
